# EUROPEAN PATENT APPLICATION

(11) **EP 2 346 257 A1**
(43) Date of publication of application: **20.07.2011**
(21) Application number: 09824539.2
(22) Date of filing: 20.10.2009
(51) Int. Cl.: H04N 7/32

(54) **DYNAMIC IMAGE ENCODING DEVICE AND DYNAMIC IMAGE DECODING DEVICE**

(30) Priority: 07.11.2008 JP 2008286487
(71) Applicant: Mitsubishi Electric Corporation, Tokyo 100-8310 (JP)
(72) Inventor: IDEHARA, Yuichi, Tokyo 100-8310 (JP); SEKIGUCHI, Shunichi, Tokyo 100-8310 (JP)
(74) Representative: Pfenning, Meinig & Partner GbR
(86) International application number: PCT/JP2009/005486
(87) International publication number: WO 2010/052838

(57) **Abstract**

The image encoding device of the present invention includes a direct vector determination unit 34 that excludes a direct vector derived by a direct vector calculation unit 33 from vectors targeted for averaging in the case where a unit region having, as a starting point thereof, a pixel location indicated by the direct vector includes a region outside a picture, and a motion compensation predicted image generation unit 35 that generates a motion compensation predicted image by obtaining pixel values of motion compensation predicted image for the unit region targeted for encoding, with one or more motion vectors determined by the direct vector determination unit 34.

## Description

### TECHNICAL FIELD

This invention relates to an image encoding device that encodes image data in the form of a digital video signal by compression, and outputs image compression-encoded data, and to an image decoding device that restores a digital video signal by decoding image compression-encoded data output from an image encoding device.

### BACKGROUND ART

MPEG, ITU-T H.26x and other international standard video encoding methods employ a method that encodes by compressing units consisting of block data (to be referred to as "macro blocks") combining 16 x 16 pixel luminance signals and 8 x 8 pixel color difference signals corresponding to the luminance signals based on motion search/compensation technology and orthogonal transformation/transformation coefficient quantization technology when encoding each frame of video signals (see, for example, Patent Document 1).
In the case of decoding bit streams as well, processing is carried out in macro block units, and decoded images are ultimately output after having decoded all the macro blocks of a single image.

In general, motion search in image encoding devices is carried out in the proximity of the macro block targeted for encoding.
Consequently, the effective search region inevitably becomes small for those macro blocks located on the edges of a picture and the accuracy of motion compensation prediction unavoidably decreases for encoding of macro blocks at such locations as compared with macro blocks at other locations.
Thus, the problem of image quality deterioration is known to occur in macro blocks targeted for encoding located along the edges of a picture.

Therefore, in the image encoding device disclosed in Patent Document 1 indicated below, quantization parameters of macro blocks along the edges of a picture are adjusted in order to inhibit deterioration of image quality in those macro blocks located along the edges of the picture.

Patent Document 1: Japanese Patent Application Laid-open No. 2000-059779 (FIG. 1)

Since conventional image encoding devices are configured in the manner described above, although image quality deterioration in macro blocks along the edges of a picture can be prevented; however, there is a problem such that adjustment of quantization parameters of those macro blocks on the picture edges ends up increases the code quantities of those macro blocks in comparison with the code quantities of macro blocks of other areas, which leads to a decrease in compression ratio.

### SUMMARY OF THE INVENTION

The present invention is made to solve the foregoing problems, and an obj ect of this invention is to provide an image encoding device capable of preventing deterioration of image quality in macro blocks along a picture edge without leading to a decrease in compression ratio.
In addition, an object of this invention is to provide an image decoding device capable of restoring digital video signals by decoding image compression-encoded data output from an image encoding device like that described above.

The image encoding device according to this invention is provided with: a motion vector derivation unit for deriving one or more motion vectors of a unit region targeted for encoding in a picture targeted for encoding, from motion vector of neighbouring encoded unit region, and from motion vector of unit region located at a previously encoded picture; a motion vector selection unit for, in the case where a unit region having, as a starting point thereof, a pixel location indicated by a motion vector derived by the motion vector derivation unit includes a region outside a picture, excluding that motion vector from vectors targeted for averaging; and a motion compensation predicted image generation unit for generating a motion compensation predicted image by obtaining pixel values of motion compensation predicted image for the unit region targeted for encoding, with one or more motion vectors determined by the motion vector selection unit, wherein an encoding unit determines a difference image between the picture to be encoded and a motion compensation predicted image generated by the motion compensation predicted image generation unit and encodes the difference image.

According to this invention, the effect of preventing deterioration of image quality in macro blocks along a picture edge is demonstrated without leading to a decrease in compression ratio, as a result of employing a configuration in which are provided: the motion vector derivation unit for deriving one or more motion vectors of a unit region targeted for encoding in a picture targeted for encoding, from motion vector of neighbouring encoded unit region, and from motion vector of unit region located at a previously encoded picture that is stored in frame memory; the motion vector selection unit for, in the case where a unit region having, as a starting point thereof, a pixel location indicated by a motion vector derived by the motion vector derivation unit includes a region outside a picture, excluding that motion vector from vectors targeted for averaging; and the motion compensation predicted image generation unit for generating a motion compensation predicted image by obtaining pixel values of motion compensation predicted image for the unit region targeted for encoding, with one or more motion vectors determined by the motion vector selection unit, wherein the encoding unit determines a difference image between the picture to be encoded and a motion compensation predicted image generated by the motion compensation predicted image generation unit and encodes the difference image.

### BRIEF DESCRIPTION OF THE DRAWINGS

FIG. 1 is a block diagram showing a connection relationship between an image encoding device and an image decoding device according to a first embodiment of this invention;
FIG. 2 is a block diagram showing an image encoding device 1 in the first embodiment of this invention;
FIG. 3 is a block diagram showing the interior of a motion compensation unit 26 in the image encoding device 1 of FIG. 2;
FIG. 4 is an explanatory drawing indicating the contents of processing of a direct vector calculation unit 33 disclosed in H.264/AVC;
FIG. 5 is an explanatory drawing indicating the contents of processing of the direct vector calculation unit 33 disclosed in H.264/AVC;
FIG. 6 is an explanatory drawing indicating the contents of processing of the direct vector calculation unit 33 disclosed in H.264/AVC;
FIG. 7 is an explanatory drawing indicating the contents of processing of the direct vector calculation unit 33 disclosed in H.264/AVC;
FIG. 8 is an explanatory drawing indicating a case in which a leading end of a direct vector is indicating a region outside a picture;
FIG. 9 is an explanatory drawing indicating a technology referred to as "picture edge expansion" that extends pixels on the edges of a picture to outside the picture;
FIG. 10 is an explanatory drawing indicating a motion compensation predicted image generated by a motion compensation predicted image generation unit 35 by excluding a direct vector indicating a unit region that includes an outside picture region from vectors targeted for averaging;
FIG. 11 is a block diagram showing an image decoding device 2 according to the first embodiment of this invention;
FIG. 12 is a block diagram showing the interior of a motion compensation unit 50 in the image decoding device 2 of FIG. 11;
FIG. 13 is a block diagram showing the image encoding device 1 according to a second embodiment of this invention;
FIG. 14 is a block diagram showing the interior of a motion compensation unit 71 in the image encoding device 1 of FIG. 13;
FIG. 15 is a block diagram showing the image decoding device 2 according to the second embodiment of this invention;
FIG. 16 is a block diagram showing the interior of a motion compensation unit 80 in the image decoding device 2 of FIG. 15;
FIG. 17 is an explanatory drawing indicating the contents of processing of a direct vector determination unit 34; and
FIG. 18 is an explanatory drawing indicating the contents of processing of the direct vector determination unit 34.

### BEST MODE FOR CARRYING OUT THE INVENTION

The following provides an explanation of embodiments of the present invention in accordance with the appended drawings in order to provide a more detailed explanation of this invention.

### First Embodiment

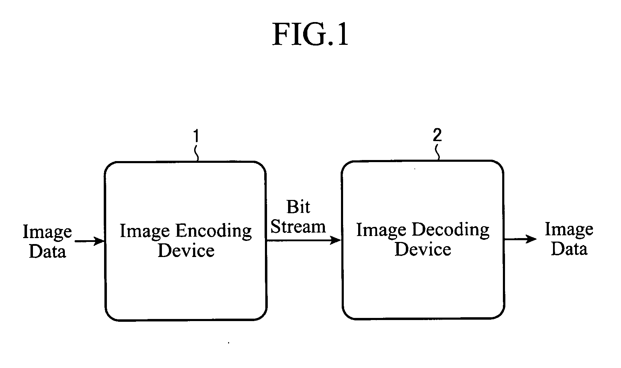

FIG. 1 is a block diagram showing the connection relationship between an image encoding device and an image decoding device according to a first embodiment of this invention.

In FIG. 1, an image encoding device 1 is an encoding device that uses, for example, an H.264/AVC encoding method, and when image data (video image) of an image is input therein, a plurality of pictures that compose that image data are divided into prescribed unit regions, motion vectors are determined for each unit region, and that image data is encoded by compression using the motion vectors of each unit region to transmit a bit stream consisting of compression-encoded data of that image data to an image decoding device 2.

When the bit stream transmitted from the image encoding device 1 is received, the image decoding device 2 uses the motion vectors of each unit region to restore the image data (video signal) of the image by decoding that bit stream.

### <Configuration of Image Encoding Device 1>

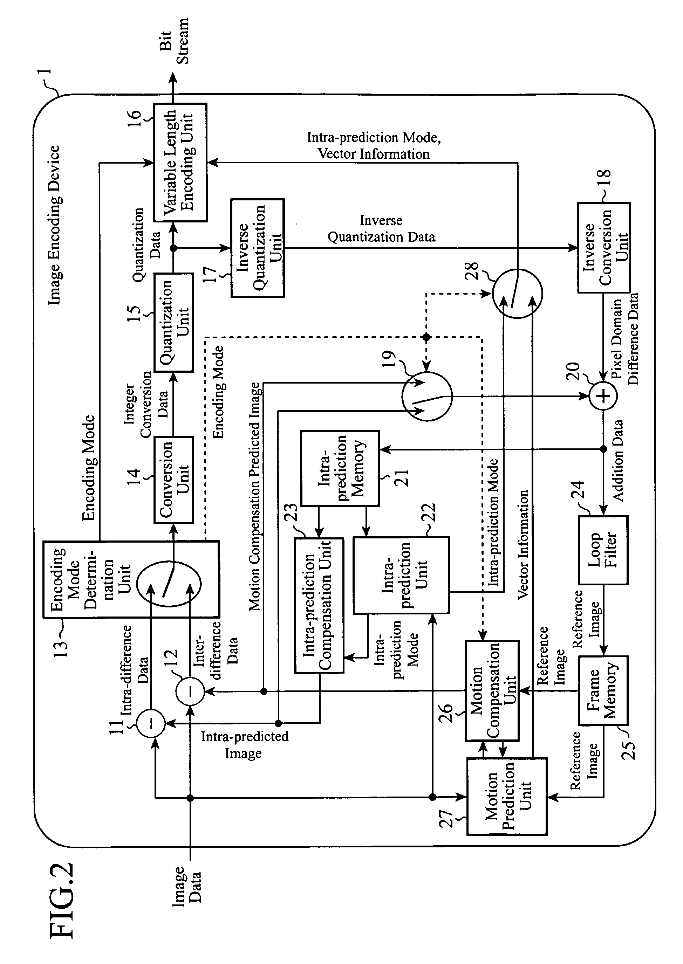

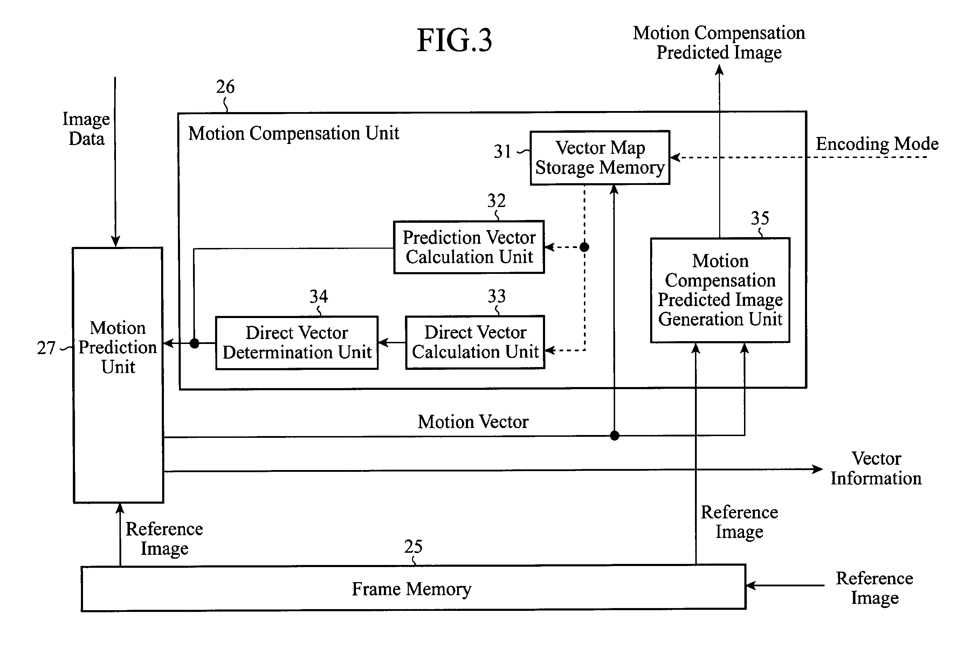

FIG. 2 is a block diagram showing the image encoding device 1 according to a first embodiment of this invention, while FIG. 3 is a block diagram showing the interior of a motion compensation unit 26 in the image encoding device 1 of FIG. 2.

The basic configuration in the image encoding device 1 of FIG. 2 is the same as that of an image encoding device typically used in an H.264/AVC encoder.

However, although a direct vector determination unit 34 of FIG. 3 is not arranged in the motion compensation unit 26 in an H.264/AVC encoder, the direct vector determination unit 34 is arranged in the motion compensation unit 26 of the image encoding device 1 of FIG. 2, thus making the two different with respect to this point.

In FIG. 2, a subtracter 11 carries out processing that determines difference between image data and image data of an intra-predicted image generated by an intra-prediction compensation unit 23, and outputs data of that difference in the form of intra-difference data to an encoding mode determination unit 13.
A subtracter 12 carries out processing that determines a difference between image data and image data of a motion compensation predicted image generated by the motion compensation unit 26, and outputs that difference data in the form of inter-difference data to the encoding mode determination unit 13.

The encoding mode determination unit 13 carries out processing that compares intra-difference data output from the subtracter 11 with inter-difference data output from the subtracter 12, determines whether an encoding mode that carries out compression based on an intra-prediction is to be employed or an encoding mode that carries out compression based on motion prediction is to be employed, and notifies switches 19 and 28, the motion compensation unit 26 and a variable length encoding unit 16 of the encoding mode that has been determined. In addition, in the case where an encoding mode that carries out compression based on intra-prediction is employed, the encoding mode determination unit 13 carries out processing that outputs intra-difference data output from the subtracter 11 to a conversion unit 14, while in the case where an encoding mode that carries out compression based on motion prediction is employed, the encoding mode determination unit 13 carries out processing that outputs inter-difference data output from the subtracter 12 to the conversion unit 14.

The conversion unit 14 carries out processing that integer converts intra-difference data or inter-difference data output from the encoding mode determination unit 13, and outputs that integer conversion data to a quantization unit 15.
The quantization unit 15 carries out processing that quantizes integer conversion data output from the conversion unit 14, and outputs the quantized data to the variable length encoding unit 16 and an inverse quantization unit 17.

The variable length encoding unit 16 carries out processing consisting of carrying out variable length encoding on quantization data output from the quantization unit 15, the encoding mode determined by the encoding mode determination unit 13, and an intra-prediction mode or vector information (vector information relating to the optimum motion vector determined by a motion prediction unit 27) output from the switch 28, and transmitting that variable length encoded data (compression encoded data) in the form of a bit stream to the image decoding device 2.
Furthermore, encoding unit is composed of the subtracters 11 and 12, the encoding mode determination unit 13, the conversion unit 14, the quantization unit 15 and the variable length encoding unit 16.

The inverse quantization unit 17 carries out processing that inversely quantizes quantization data output from the quantization unit 15, and outputs the inversely quantized data to an inverse conversion unit 18.
The inverse conversion unit 18 carries out processing that inversely integer converts inverse quantization data output from the inverse quantization unit 17, and outputs the inverse integer conversion data in the form of pixel domain difference data to an adder 20.

The switch 19 carries out processing that outputs image data of the intra-predicted image generated by the intra-prediction compensation unit 23 to the adder 20 if the encoding mode determined by the encoding mode determination unit 13 is an encoding mode that carries out compression based on intra-prediction, or outputs image data of the motion compensation predicted image generated by the motion compensation unit 26 to the adder 20 if the encoding mode is an encoding mode that carries out compression based on motion prediction.
The adder 20 carries out processing that adds image data of the intra-predicted image or motion compensation predicted image output from the switch 19 to pixel domain difference data output from the inverse conversion unit 18.

An intra-prediction memory 21 is a memory that stores addition data output from the adder 20 as image data of intra-predicted images.
An intra-prediction unit 22 carries out processing that determines the optimum intra-prediction mode by comparing image data and image data of peripheral pixels stored in the intra-prediction memory 21 (image data of intra-prediction images).
An intra-prediction compensation unit 23 carries out processing that generates an intra-predicted image of the optimum intra-prediction mode determined by the intra-prediction unit 22 from image data of peripheral pixels (image data of intra-prediction images) stored in the intra-prediction memory 21.

A loop filter 24 carries out filtering processing that removes noise components and the like in a prediction loop contained in addition data output from the adder 20.
A frame memory 25 is a memory that stores addition data following filtering processing by the loop filter 24 as image data of reference images.
The motion compensation unit 26 carries out processing that divides a plurality of pictures that compose image data into prescribed unit regions to predict one or more prediction vectors or direct vectors of each unit region, and also generates a motion compensation predicted image from one or more optimum motion vectors determined by the motion prediction unit 27 and image data of reference images stored in the frame memory 25.

The motion prediction unit 27 carries out processing that determines one or more optimum motion vectors from image data, image data of reference images stored in the frame memory 25, a prediction vector predicted by a prediction vector calculation unit 32 of the motion compensation unit 26, and one or more direct vectors remaining as vectors targeted for averaging or arithmetic mean without being excluded by the direct vector determination unit 34 of the motion compensation unit 26. For example, in the case of a motion vector of a P picture, a single motion vector is determined as the optimum motion vector, while in the case of a motion vector of a B picture, two motion vectors are determined as optimum motion vectors.
Namely, the motion prediction unit 27 carries out processing that determines one or more optimum motion vectors according to a technology commonly referred to as R-D optimization (a technology for determining motion vectors in a form that additionally considers the code quantities of motion vectors instead of simply minimizing a difference between image data and image data of reference images stored in the frame memory 25).

The switch 28 carries out processing that outputs the optimum intra-prediction mode determined by the intra-prediction unit 22 to the variable length encoding unit 16 if the encoding mode determined by the encoding mode determination unit 13 is an encoding mode that carries out compression based on intra-prediction, or outputs vector information relating to the optimum motion vector determined by the motion prediction unit 27 (a difference vector indicating a difference between a motion vector and a prediction vector in the case where the optimum motion vector is determined from a prediction vector predicted by the prediction vector calculation unit 32 of the motion compensation unit 26, or information indicating that the optimum motion vector has been determined from a direct vector in the case where the optimum motion vector is determined from a direct vector predicted by the direct vector calculation unit 33 of the motion compensation unit 26) to the variable length encoding unit 16 if the encoding mode is an encoding mode that carries out compression based on motion prediction.

In FIG. 3, a vector map storage memory 31 of the motion compensation unit 26 is a memory that stores an optimum motion vector determined by the motion prediction unit 27, or in other words, a motion vector of a unit region that has been encoded in each picture. However, although storage of the motion vector continues if the encoding mode determined by the encoding mode determination unit 13 is an encoding mode that carries out compression based on motion prediction, that motion vector is excluded from those vectors targeted for averaging if the encoding mode determined by the encoding mode determination unit 13 is an encoding mode that carries out compression based on intra-prediction.
The prediction vector calculation unit 32 carries out processing that predicts one or more prediction vectors based on prescribed rules by referring to motion vectors stored in the vector map storage memory 31.

A direct vector calculation unit 33 carries out processing that predicts one or more motion vectors of a unit region targeted for encoding as direct vectors from motion vectors stored in the vector map storage memory 31, namely motion vectors of encoded unit regions present in proximity to the unit region targeted for encoding a picture targeted for encoding, and motion vectors of unit regions at the same location as the unit region in encoded pictures positioned chronologically before and after the picture. Furthermore, the direct vector calculation unit 33 composes motion vector derivation unit.

The direct vector determination unit 34 carries out processing that outputs a direct vector to the motion prediction unit 27 if a unit region having, as a starting point thereof, a pixel location indicated by the direct vector predicted by the direct vector calculation unit 33 does not include a region outside the picture, but excludes the direct vector from vectors targeted for averaging if the unit region includes a region outside the picture. Furthermore, the direct vector determination unit 34 composes direct vector selection unit.

A motion compensation predicted image generation unit 35 carries out processing that generates a motion compensation predicted image by determining an average of pixel values of unit regions having, as a starting point thereof, pixel locations indicated by one or more optimum motion vectors determined by the motion prediction unit 27. Furthermore, the motion compensation predicted image generation unit 35 composes motion compensation predicted image generation unit.

The following provides an explanation of operation.
However, since processing of processing units other than the direct vector determination unit 34 of the motion compensation unit 26 in the image encoding device 1 of FIG. 2 is equivalent to processing typically used in H.264/AVC encoding, only brief explanations are provided regarding the operation of processing units other than the direct vector determination unit 34.

When image data of an image is input, the subtracter 11 determines a difference between that image data and image data of an intra-predicted image generated by the intra-prediction compensation unit 23 to be subsequently described, and outputs that difference data in the form of intra-difference data to the encoding mode determination unit 13.
In addition, when image data of an image is input, the subtracter 12 determines a difference between that image data and image data of a motion compensation predicted image generated by the motion compensation unit 26 to be subsequently described, and outputs that difference data in the form of inter-difference data to the encoding mode determination unit 13.

When intra-difference data is received from the subtracter 11 and inter-difference data is received from the subtracter 12, the encoding mode determination unit 13 compares the intra-difference data and the inter-difference data and determines whether an encoding mode that carries out compression based on intra-prediction or an encoding mode that carries out compression based on motion prediction is to be employed. However, the method for determining the encoding mode based on the comparison of intra-difference data and inter-difference data uses a technology typically referred to as R-D optimization (a technology for determining the encoding mode in a form that additionally considers code quantities instead of simply selecting the smaller difference) .

When the encoding mode determination unit 13 has determined the encoding mode, it notifies the switches 19 and 28, the motion compensation unit 26 and the variable length encoding unit 16 of that encoding mode.
In addition, the encoding mode determination unit 13 outputs the intra-difference data output from the subtracter 11 to the conversion unit 14 in the case where an encoding mode that carries out compression based on intra-prediction is employed, or outputs the inter-difference data output from the subtracter 12 to the conversion unit 14 in the case where an encoding mode that carries out compression based on motion prediction is employed.

When intra-difference data or inter-difference data has been received from the encoding mode determination unit 13, the conversion unit 14 integer converts the intra-difference data or the inter-difference data, and outputs that integer conversion data to the quantization unit 15. When the integer conversion data has been received from the conversion unit 14, the quantization unit 15 quantizes the integer conversion data and outputs the quantized data to the variable length encoding unit 16 and the inverse quantization unit 17. The variable length encoding unit 16 carries out variable length encoding on the quantized data output from the quantization unit 15, the encoding mode determined by the encoding mode determination unit 13, and the intra-prediction mode or vector information (vector information relating to an optimum motion vector determined by the motion prediction unit 27) output from the switch 28 to be subsequently described, and transmits that variable length encoded data in the form of a bit stream to the image decoding device 2.

When quantized data is received from the quantization unit 15, the inverse quantization unit 17 carries out inverse quantization on that quantized data and outputs the inverse quantized data to the inverse conversion unit 18.
When inverse quantized data is received from the inverse quantization unit 17, the inverse conversion unit 18 inversely integer converts the inverse quantized data, and outputs that inverse integer conversion data in the form of pixel domain difference data to the adder 20.

The switch 19 outputs image data of the intra-predicted image generated by the intra-prediction compensation unit 23 to be subsequently described to the adder 20 if the encoding mode determined by the encoding mode determination mode 13 is an encoding mode that carries out compression based on intra-prediction, or outputs image data of the motion compensation predicted image generated by the motion compensation unit 26 to be subsequently described to the adder 20 if the encoding mode carries out compression based on motion prediction.
The adder 20 adds image data of the intra-predicted image or the motion compensation predicted image output from the switch 19 and the pixel domain difference data output from the inverse conversion unit 18, and outputs that addition data to the intra-prediction memory 21 and the loop filter 24.

The intra-prediction unit 22 determines the optimum intra-prediction mode by comparing image data of an input image with image data of peripheral pixels stored in the intra-prediction memory 21 (image data of intra-prediction images). Since the method for determining the optimum intra-prediction mode uses the technology typically referred to as R-D optimization, a detailed explanation thereof is omitted.
When the intra-prediction unit 22 determines the optimum intra-prediction mode, the intra-prediction compensation unit 23 generates an intra-predicted image of that intra-prediction mode from image data of peripheral pixels stored in the intra-prediction memory 21 (image data of intra-prediction images), and outputs image data of the intra-predicted image to the subtracter 11 and the switch 19. However, since the method for generating the intra-predicted image is disclosed in H.264/AVC, a detailed explanation thereof is omitted.

When addition data (image data of the motion compensation predicted image + pixel domain difference data) is received from the adder 20, the loop filter 24 carries out filtering processing that removes noise components and the like in a prediction loop contained in that addition data, and stores the addition data following filtering processing in the frame memory 25 as image data of reference images.
The motion compensation unit 26 carries out processing that divides a plurality of pictures that compose image data into prescribed unit regions to predict one or more prediction vectors or direct vectors of each unit region, and also generates a motion compensation predicted image from one or more optimum motion vectors determined by the motion prediction unit 27 and reference images stored in the frame memory 25.
The following provides a detailed explanation of the contents of processing of the motion compensation unit 26.

An optimum motion vector previously determined by the motion prediction unit 27, namely a motion vector of an encoded unit region in each picture, is stored in the vector map storage memory 31 of the motion compensation unit 26. However, although the motion vector is continued to be stored if the encoding mode determined by the encoding mode determination unit 13 is an encoding mode that carries out compression based on motion prediction, if the encoding mode determined by the encoding mode determination unit 13 is an encoding mode that carries out compression based on intra -prediction, then the motion vector is excluded from motion vectors targeted for averaging.
The prediction vector calculation unit 32 of the motion compensation unit 26 calculates one or more prediction vectors based on prescribed rules by referring to a motion vector of an encoded unit region in each picture stored in the vector map storage memory 31. However, since the rules for calculating the prediction vector are disclosed in H.264/AVC, a detailed explanation thereof is omitted.

The direct vector calculation unit 33 of the motion compensation unit 26 predicts one or more motion vectors of the unit region targeted for encoding in a picture targeted for encoding, from motion vectors stored in the vector map storage memory 31, namely motion vectors of encoded unit regions present in proximity to unit regions targeted for encoding, and from motion vectors of unit regions at the same location as the unit region in encoded pictures positioned chronologically before and after the picture.

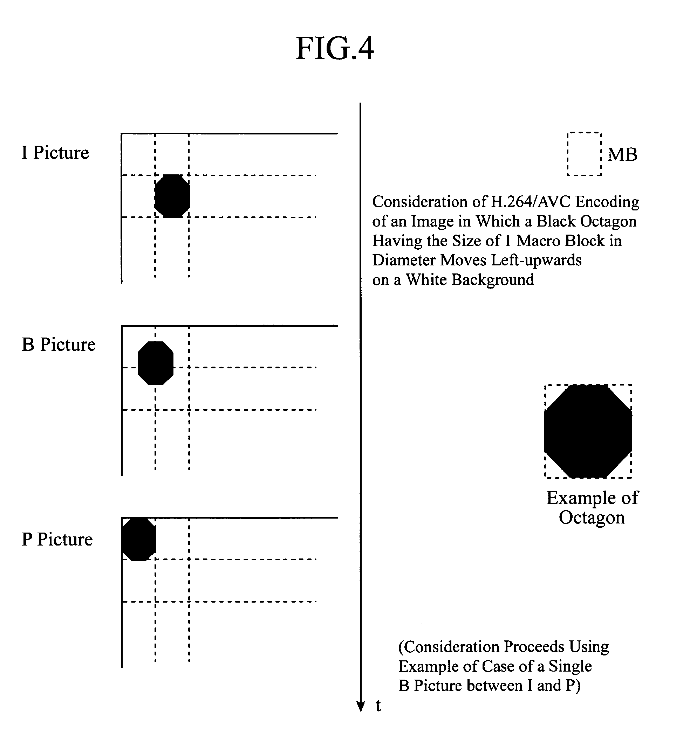

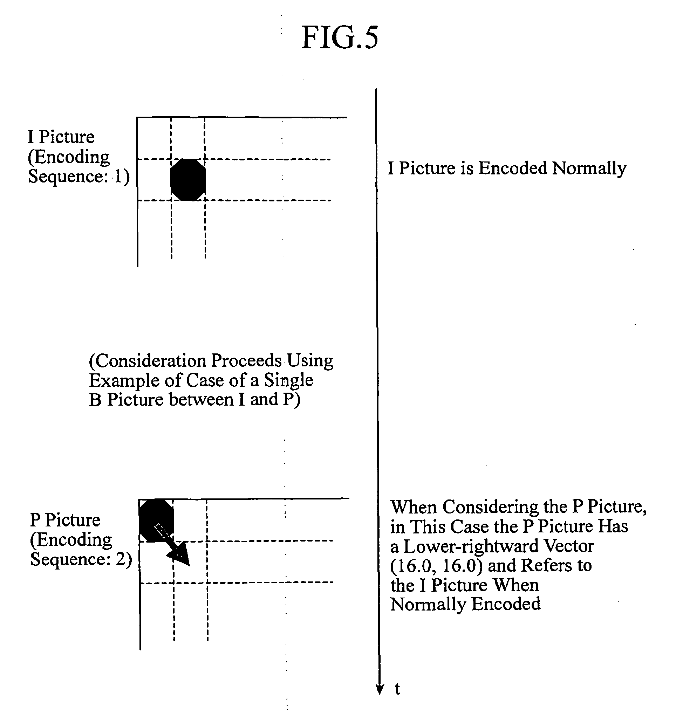

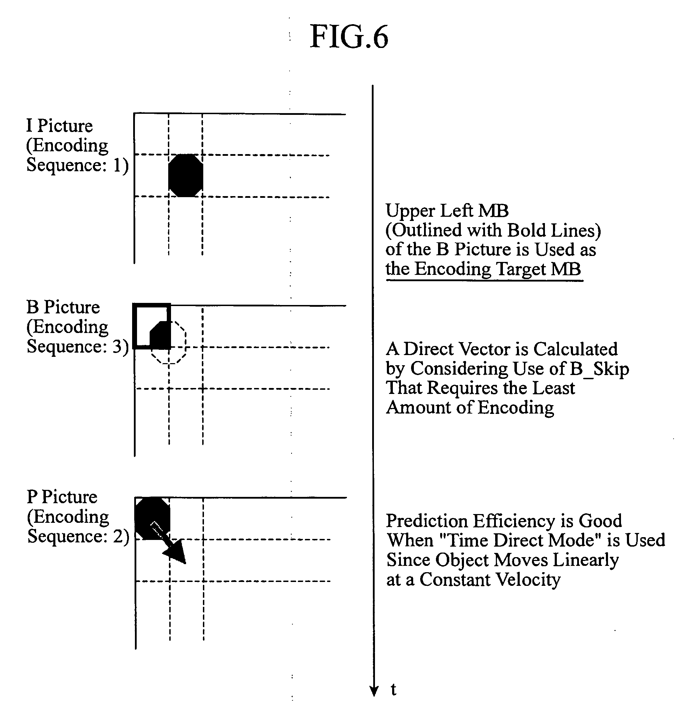

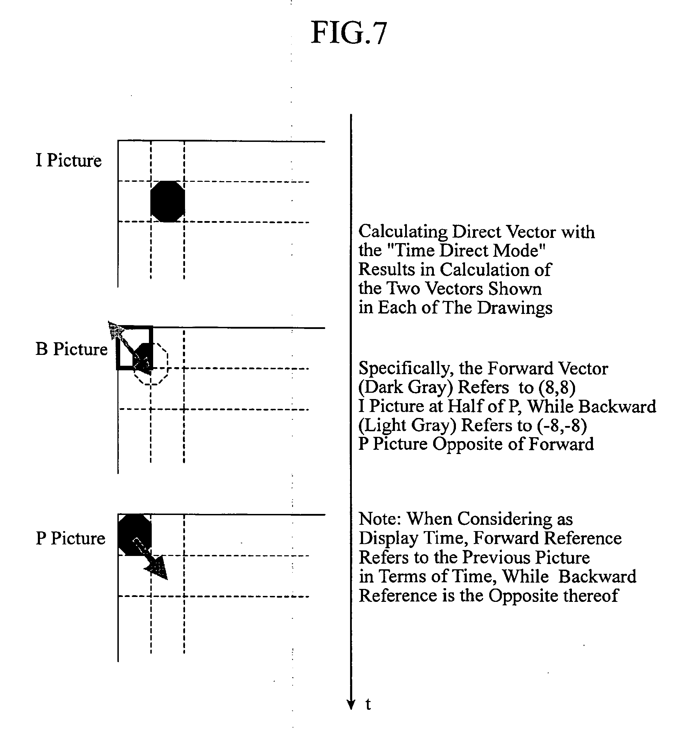

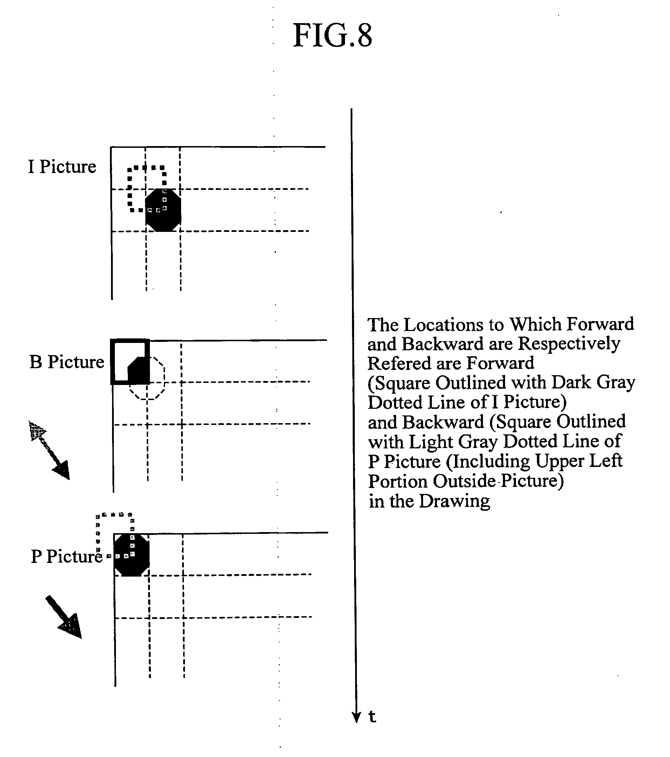

Here, FIGS. 4 to 7 are explanatory drawings indicating the contents of processing of the direct vector calculation unit 33 disclosed in H.264/AVC.
A direct vector in H.264/AVC is a vector used in a B picture, and FIGS. 4 to 7 show an example of a time direct method.
In this example, two direct vectors (refer to the vectors of the B picture) as shown in FIG. 7 are calculated by the direct vector calculation unit 33.
Consequently, when the motion compensation predicted image generation unit 35 to be subsequently described generates a motion compensation predicted image, it refers to an image location as shown in FIG. 8, and carries out a reference in which one of the direct vectors includes a region outside the picture (refer to the dotted line of the P picture).
However, even if a leading end of the direct vector indicates an area within the picture, the direct vector indicates an area outside the picture in the case where the unit region having, as a starting point thereof, a pixel location indicated by the direct vector includes a region outside the picture.

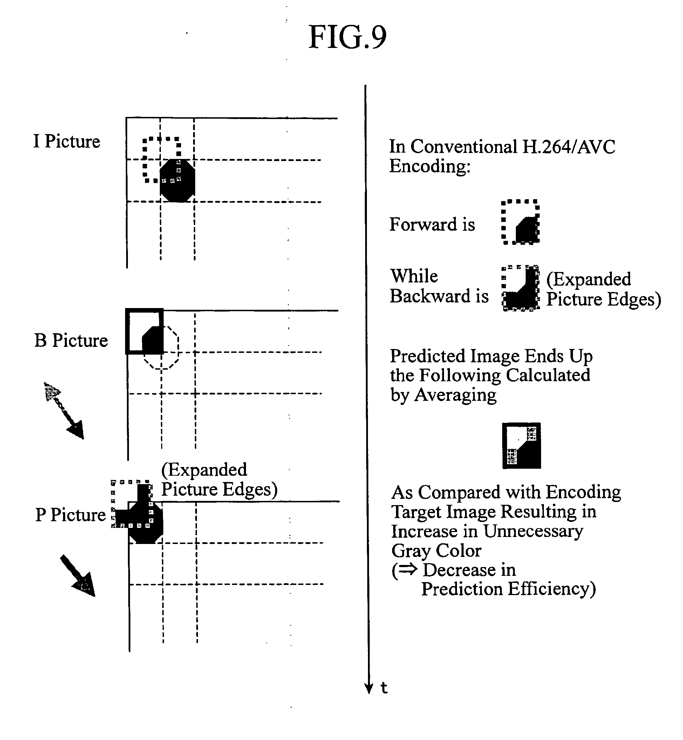

A technology typically referred to as "picture edge expansion" is defined by standards in H.264/AVC. Namely, as shown in FIG. 9, this technology standardizes determination of outside picture pixels in a form so as to extend pixels along the edges of the picture to outside the picture.
As a result, since a direct mode prediction image is output for the gray portion shown in FIG. 9 from the motion compensation predicted image generation unit 35 as a portion of a motion compensation predicted image, this leads to a decrease in prediction efficiency.
Incidentally, in the case where the images shown in this example are encoded using the typical method of H.264/AVC, approximately 30 bits are required to encode that block (encoding is required using (CAVLC, B_16 x 16_LO, motion vector (8.0,8.0), no coefficient)).

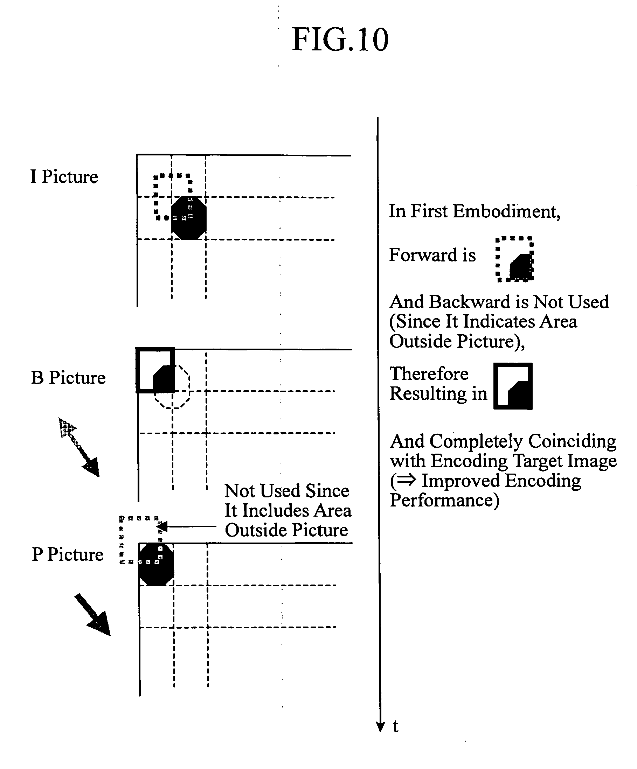

In this first embodiment, determination of the direct vector is carried out with an algorithm as shown in FIG. 10 in order to avoid the output of direct mode predicted images as described above.
The algorithm shown in FIG. 10 is an algorithm that designates a direct vector indicating a region that includes an area outside the picture as not being used, and the subsequently described direct vector determination unit 34 executes this algorithm.
When a direct vector indicating a region that includes an area outside the picture is indicated as not being used, reference is made in only one direction, and since the direct mode predicted image coincides with the image targeted for encoding, prediction efficiency is improved considerably.
In this example of the first embodiment, it is sufficient to encode B_Skip (although B_Skip constitutes variable length encoding, it is generally known to be an average of 1 bit or less).

In the case where the direct vector calculation unit 33 predicts one or more direct vectors, although the direct vector determination unit 34 of the motion compensation unit 26 outputs that direct vector to the motion prediction unit 27 if a unit region having, as a starting point thereof, a pixel location indicated by that direct vector does not include a region outside the picture; if the unit region having, as a starting point thereof, the pixel location indicated by that direct vector includes a region outside the picture, that direct vector is excluded from vectors targeted for averaging.
However, in the case where all direct vectors predicted by the direct vector calculation unit 33 correspond to a direct vector that indicates a unit region that includes a region outside the picture, then those direct vectors are exceptionally output to the motion prediction unit 27 without excluding from vectors targeted for averaging in the direct vector determination unit 34.

The motion prediction unit 27 determines one or more optimum motion vectors from image data of an image, image data of reference images stored in the frame memory 25, a prediction vector predicted by the prediction vector calculation unit 32 of the motion compensation unit 26, and one or more direct vectors that remain without being excluded from vectors targeted for averaging by the direct vector determination unit 34 of the motion compensation unit 26.
For example, in the case of a motion vector of the P picture, a single motion vector is determined as the optimum motion vector, while in the case of a motion vector of the B picture, two motion vectors are determined as optimum motion vectors. However, the method for determining one or more optimum motion vectors consists of carrying out processing for determining one or more optimum motion vectors is carried out according to the technology typically referred to as R-D optimization (the technology for determining motion vectors in a form that additionally considers the code quantities of motion vectors instead of simply minimizing the difference between image data and image data of reference images stored in the frame memory 25).

When an optimum motion vector has been determined, the motion prediction unit 27 outputs vector information relating to that optimum motion vector to the switch 28.
Namely, if the motion prediction unit 27 determines an optimum motion vector by using a prediction vector predicted by the prediction vector calculation unit 32 of the motion compensation unit 26 when determining the optimum motion vector, it outputs a difference vector indicating a difference between the motion vector and the prediction vector to the switch 28 as vector information.
If the motion prediction unit 27 determines the optimum motion vector by using a direct vector predicted by the direct vector calculation unit 33 of the motion compensation unit 26 when determining the optimum motion vector, it outputs information indicating that the optimum motion vector has been determined from a direct vector to the switch 28 as vector information.

When the motion prediction unit 27 has determined only one optimum motion vector, the motion compensation predicted image generation unit 35 of the motion compensation unit 26 generates a pixel value of the unit region having, as a starting point thereof, the pixel location indicated by that motion vector as a motion compensation predicted image.
In addition, when the motion compensation unit 27 has determined two or more optimum motion vectors, the motion compensation predicted image generation unit 35 generates a motion compensation predicted image by determining an average of pixel values of the unit regions having for starting points thereof the pixel locations indicated by the two or more optimum motion vectors.
In this manner, as a result of the direct vector determination unit 34 of the motion compensation unit 26 excluding a direct vector that indicates a unit region that includes a region outside the picture from vectors targeted for averaging, the motion compensation predicted image generated by the motion compensation predicted image generation unit 35 becomes as shown in FIG. 10.
Consequently, although B_Skip cannot be encoded with H.264/AVC, for portions requiring codes of approximately 30 bits, B_Skip can be encoded in this first embodiment, thereby requiring only 1 bit of code and allowing the advantage of improved prediction efficiency to be obtained.

The switch 28 outputs the optimum intra-prediction mode determined by the intra-prediction unit 22 to the variable length encoding unit 16 if the encoding mode determined by the encoding mode determination unit 13 is an encoding mode that carries out compression based on intra-prediction, or outputs vector information relating to the optimum motion vector determined by the motion prediction unit 27 to the variable length encoding unit 16 if the encoding mode carries out compression based on motion prediction.

### <Configuration of Image Decoding Device 2>

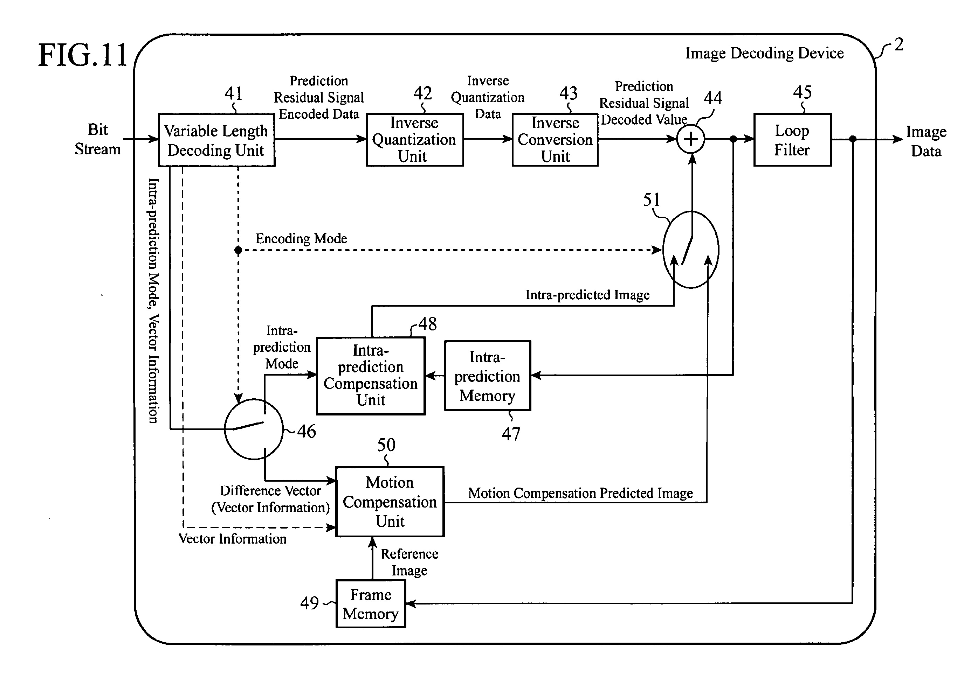

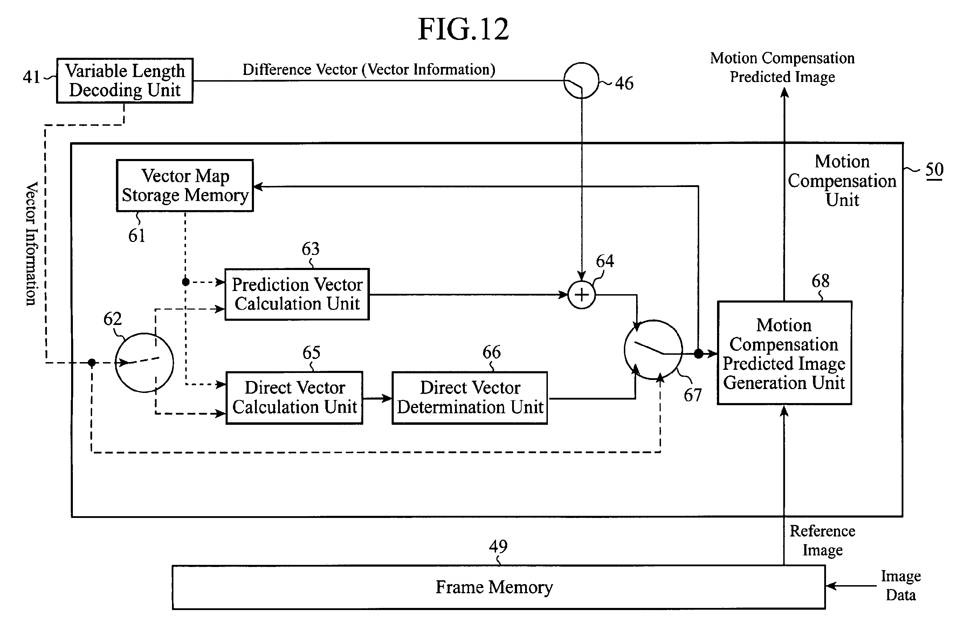

FIG. 11 is a block diagram showing the image decoding device 2 according to the first embodiment of this invention, while FIG. 12 is a block diagram showing the interior of a motion compensation unit 50 in the image decoding device 2 of FIG. 11.
The basic configuration of the image decoding device 2 of FIG. 11 is the same as the configuration of an image decoding device typically used in an H.264/AVC decoder.
However, although a direct vector determination unit 66 of FIG. 12 is not mounted in the motion compensation unit 50 in an H.264/AVC decoder, the direct vector determination unit 66 is mounted in the motion compensation unit 50 of the image decoding device 2 of FIG. 11, thus making the two different with respect to this point.

In FIG. 11, when a variable length decoding unit 41 receives a bit stream transmitted from the image encoding device 1, it analyzes the syntax of the bit stream, outputs a prediction residual signal encoded data corresponding to quantized data output from the quantization unit 15 of the image encoding device 1 to an inverse quantization unit 42, and outputs the encoding mode determined by the encoding mode determination unit 13 of the image encoding device 1 to switches 46 and 51. In addition, the variable length decoding unit 41 carries out processing that outputs an intra-prediction mode output from the intra prediction unit 22 of the image encoding device 1 or vector information output from the motion prediction unit 27 to the switch 46, and outputs vector information output from the motion prediction unit 27 to the motion compensation unit 50.

The inverse quantization unit 42 carries out processing that inversely quantizes prediction residual signal encoded data output from the variable length decoding unit 41, and outputs the inversely quantized data to an inverse conversion unit 43.
The inverse conversion unit 43 carries out processing that inversely integer converts inversely quantized data output from the inverse quantization unit 42, and outputs the inverse integer conversion data in the form of a prediction residual signal decoded value to an adder 44.
The adder 44 caries out processing that adds image data of an intra-predicted image or motion compensation predicted image output from the switch 51 and the prediction residual signal decoded value output from the inverse conversion unit 43.

A loop filter 45 carries out filtering processing that removes noise components and the like in a prediction loop contained in that addition data output from the adder 44, and outputs addition data following filtering processing as image data of a decoded image (image).
Furthermore, decoding unit is composed of the variable length decoding unit 41, the inverse quantization unit 42, the inverse conversion unit 43, the adder 44 and the loop filter 45.

The switch 46 carries out processing that outputs an intra-prediction mode output from the variable length decoding unit 41 to an intra-prediction compensation unit 48 if the encoding mode output from the variable length decoding unit 41 is an encoding mode that carries out compression based on intra-prediction, or outputs vector information output from the variable length decoding unit 41 to the motion compensation unit 50 if the encoding mode carries out compression based on motion prediction.

An intra-prediction memory 47 is a memory that stores addition data output from the adder 44 as image data of intra-prediction images.
The intra-prediction compensation unit 48 carries out processing that generates an intra-predicted image of the intra-prediction mode output by the switch 46 from image data of peripheral pixels (image data of intra-prediction images) stored in the intra-prediction memory 47.

A frame memory 49 is a memory that stores image data output from the loop filter 45 as image data of reference images.
The motion compensation unit 50 carries out processing that divides a plurality of pictures that compose image data into prescribed unit regions to predict one or more prediction vectors or direct vectors of each unit region, and also generates a motion compensation predicted image from image data of reference images stored in the frame memory 49.

The switch 51 carries out processing that outputs image data of an intra-predicted image generated by the intra-prediction compensation unit 48 to the adder 44 if the encoding mode output from the variable length decoding unit 41 is an encoding mode that carries out compression based on intra-prediction, or outputs image data of a motion compensation predicted image generated by the motion compensation unit 50 to the adder 44 if the encoding mode carries out compression based on motion prediction.

In FIG. 12, a vector map storage memory 61 of the motion compensation unit 50 is a memory that stores a motion vector output from a switch 67, namely a motion vector of a decoded unit region in each picture.
A switch 62 carries out processing that initiates a prediction vector calculation unit 63 if vector information output from the variable length decoding unit 41 corresponds to a difference vector, or initiates a direct vector calculation unit 65 if the vector information indicates that the optimum motion vector has been determined from a direct vector.

The prediction vector calculation unit 63 carries out processing that refers to a motion vector stored in the vector map storage memory 61, and predicts one or more prediction vectors based on prescribed rules. An adder 64 carries out processing that adds a prediction vector predicted by the prediction vector calculation unit 63 to a difference vector output from the variable length decoding unit 41 (vector information output from the variable length decoding unit 41 corresponds to a difference vector in the situations in which the prediction vector calculation unit 63 has been initiated), and outputs the addition result in the form of a motion vector to the switch 67.

The direct vector calculation unit 65 carries out processing that predicts one or more motion vectors of a unit region targeted for decoding in a picture targeted for decoding, from motion vectors stored in the vector map storage memory 61, namely motion vectors of decoded unit regions present in proximity to the unit region targeted for decoding, and from motion vectors of unit regions at the same location as the unit region in decoded pictures positioned chronologically before and after the picture. Furthermore, the direct vector calculation unit 65 composes motion vector derivation unit.

The direct vector determination unit 66 carries out processing that outputs the direct vector to the switch 67 if a unit region having, as a starting point thereof, a pixel location indicated by the direct vector predicted by the direct vector calculation unit 65 does not include a region outside the picture, but excludes the direct vector from vectors targeted for averaging in the case of including a region outside the picture. Furthermore, the direct vector determination unit 66 composes motion vector selection unit.

The switch 67 carries out processing that outputs a motion vector output from the adder 64 to a motion compensation predicted image generation unit 68 and the vector map storage memory 61 if vector information output from the variable length decoding unit 41 corresponds to a difference vector, or outputs a direct vector that is a motion vector output from the direct vector determination unit 66 to the motion compensation predicted image generation unit 68 and the vector map storage memory 61 if the vector information indicates that an optimum motion vector has been determined from the direct vector.
The motion compensation predicted image generation unit 68 carries out processing that generates a motion compensation predicted image by determining an average of pixel values of a unit region having, as a starting point thereof, a pixel location indicated by one or more motion vectors output from the switch 67. Furthermore, the motion compensation predicted image generation unit 68 composes motion compensation predicted image generation unit.

The following provides an explanation of operation.
When the variable length decoding unit 41 receives a bit stream transmitted from the animated image encoding device 1, it analyzes the syntax of that bit stream.
As a result, it outputs prediction residual signal encoded data corresponding to quantized data output from the quantization unit 15 of the image encoding unit 1 to the inverse quantization unit 42, and outputs an encoding mode determined by the encoding mode determination unit 13 of the image encoding device 1 to the switches 46 and 51.
In addition, the variable length decoding unit 41 outputs an intra-prediction mode output from the intra-prediction unit 22 of the image encoding device 1 or a difference vector (vector information) output from the motion prediction unit 27 to the switch 46, and outputs the vector information output from the motion prediction unit 27 to the motion compensation unit 50.

When prediction residual signal encoded data has been received from the variable length decoding unit 41, the inverse quantization unit 42 inversely quantizes the prediction residual signal encoded data and outputs that inversely quantized data to the inverse conversion unit 43.
When inversely quantized data is received from the inverse quantization unit 42, the inverse conversion unit 43 inversely integer converts the inversely quantized data and outputs that inverse integer conversion data in the form of a prediction residual signal decoded value to the adder 44.

The switch 46 outputs an intra-prediction mode output from the variable length decoding unit 41 to the intra-prediction compensation unit 48 if the encoding mode output from the variable length decoding unit 41 is an encoding mode that carries out compression based on intra-prediction, or outputs vector information from the variable length decoding unit 41 to the motion compensation unit 50 if the encoding mode carries out compression based on motion prediction.

When an intra-prediction mode is received from the switch 46, the intra-prediction compensation unit 48 generates an intra-predicted image of that intra-prediction mode from image data of peripheral pixels (image data of intra-prediction images) stored in the intra-prediction memory 47, and outputs image data of that intra-predicted image to the switch 51. However, since the method for generating the intra-predicted image is disclosed in H.264/AVC, a detailed explanation thereof is omitted.

When vector information is received from the switch 46, the motion compensation unit 50 divides a plurality of pictures that compose image data into prescribed unit regions to thereby predict one or more prediction vectors or direct vectors of each unit region, and also generates a motion compensation predicted image from the image data of reference images stored in the frame memory 49.
The following provides a detailed explanation of the contents of processing of the motion compensation unit 50.

A previously calculated motion vector, namely a motion vector of a decoded unit region in each picture, is stored in the vector map storage memory 61 of the motion compensation unit 50.
When vector information is received from the variable length decoding unit 41, the switch 62 of the motion compensation unit 50 determines whether the vector information corresponds to a difference vector or the vector information is information indicating that an optimum motion vector has been determined from a direct vector.
The switch 62 initiates the prediction vector calculation unit 63 if the vector information corresponds to a difference vector, or initiates the direct vector calculation unit 65 if the vector information is information indicating that an optimum motion vector has been determined from a direct vector.

When an initiation command is received from the switch 62, the prediction vector calculation unit 63 of the motion compensation unit 50 calculates one or more prediction vectors based on prescribed rules by referring to a motion vector of a decoded unit region in each picture stored in the vector map storage memory 61. However, since the method for calculating the prediction vector is disclosed in H.264/AVC, a detailed explanation thereof is omitted.
When one or more prediction vectors are received from the prediction vector calculation unit 63, the adder 64 of the motion compensation unit 50 adds each prediction vector to a difference vector output from the variable length decoding unit 41 (vector information output from the variable length decoding unit 41 corresponds to a difference vector in the situations in which the prediction vector calculation unit 63 has been initiated), and outputs the addition result in the form of a motion vector to the switch 67.

When an initiation command is received from the switch 62, the direct vector calculation unit 65 of the motion compensation unit 50 predicts one or more motion vectors as direct vectors of a unit region targeted for decoding in a picture targeted for decoding, from motion vectors stored in the vector map storage memory 61, namely motion vectors of decoded unit regions present in proximity to the unit region targeted for decoding, and from motion vectors of unit regions at the same location as the unit region in decoded pictures positioned chronologically before and after the picture.
Furthermore, since the contents of processing of the direct vector calculation unit 65 are similar to the contents of processing of the direct vector calculation unit 33 of FIG. 3, a detailed explanation thereof is omitted (see FIGS. 4 to 7).

When one or more direct vectors are predicted by the direct vector calculation unit 65, the direct vector determination unit 66 of the motion compensation unit 50 outputs the direct vector to the switch 67 if a unit region having, as a starting point thereof, a pixel location indicated by that direct vector does not include a region outside the picture, but excludes the direct vector from vectors targeted for averaging in the case where the unit region having, as a starting point thereof, a pixel location indicated by that direct vector includes a region outside the picture.
However, in the case where all direct vectors predicted by the direct vector calculation unit 65 correspond to a direct vector that indicates a unit region that includes a region outside the picture, then those direct vectors are exceptionally output to the switch 67 without excluding from vectors targeted for averaging in the direct vector determination unit 66.
Furthermore, the contents of processing of the direct vector determination unit 66 are similar to the contents of processing of the direct vector determination unit 34 of FIG. 3.

The switch 67 of the motion compensation unit 50 determines whether vector information output from the variable length decoding unit 41 corresponds to a difference vector, or that vector information is information indicating that an optimum motion vector has been determined from a direct vector.
The switch 67 outputs a motion vector output from the adder 64 to the motion compensation predicted image generation unit 68 and the vector map storage memory 61 if the vector information corresponds to a difference vector, or outputs a direct vector that is a motion vector output from the direct vector determination unit 66 to the motion compensation predicted image generation unit 68 and the vector map storage memory 61 if the vector information indicates that an optimum motion vector has been determined from the direct vector.

When only one motion vector is received from the switch 67, the motion compensation predicted image generation unit 68 of the motion compensation unit 50 generates a pixel value of the unit region having, as a starting point thereof, the pixel location indicated by that motion vector as a motion compensation predicted image.
In addition, when two or more motion vectors are received from the switch 67, the motion compensation predicted image generation unit 68 generates a motion compensation predicted image by determining an average of pixel values of the unit regions having for starting points thereof the pixel locations indicated by the two or more optimum motion vectors.
Furthermore, the contents of processing of the motion compensation predicted image generation unit 68 are similar to the contents of processing of the motion compensation predicted image generation unit 35 of FIG. 3.

In this manner, as a result of the direct vector determination unit 66 of the motion compensation unit 50 excluding a direct vector that indicates a unit region that includes a region outside the picture from vectors targeted for averaging, the motion compensation predicted image generated by the motion compensation predicted image generation unit 68 becomes as shown in FIG. 10.
Consequently, although B_Skip cannot be encoded with H.264/AVC, for portions requiring codes of approximately 30 bits, B_Skip can be encoded in this first embodiment, thereby requiring only 1 bit of code and allowing the advantage of improved prediction efficiency to be obtained.

The switch 51 outputs image data of an intra-predicted image generated by the intra-prediction compensation unit 48 to the adder 44 if the encoding mode output from the variable length decoding unit 41 is an encoding mode that carries out compression based on intra-prediction, or outputs image data of a motion compensation predicted image generated by the motion compensation unit 50 to the adder 44 if the encoding mode carries out compression based on motion prediction.

When a prediction residual signal decoded value is received from the inverse conversion unit 43 and image data of an intra-predicted image or motion compensation predicted image is received from the switch 51, the adder 44 adds that prediction residual signal decoded value and image data of the intra-predicted image or motion compensation predicted image, and outputs the addition data to the loop filter 45.
In addition, the adder 44 stores that addition data in the intra-prediction memory 47 as image data of intra-prediction images.

When addition data is received from the adder 44, the loop filter 45 carries out filtering processing that removes noise components and the like in a prediction loop contained in that addition data, and outputs the addition data following filtering processing as image data of a decoded image (image).
In addition, the loop filter 45 stores the image data of a decoded image in the frame memory 49 as image data of reference images.

As is clear from the previous explanation, according to this first embodiment, since the image encoding device 1 is provided with the direct vector calculation unit 33, which predicts one or more motion vectors as director vectors of the unit region targeted for encoding in a picture targeted for encoding, from motion vectors of encoded unit regions present in proximity to unit regions targeted for encoding, and from motion vectors of unit regions at the same location as the unit region in encoded pictures positioned chronologically before and after the picture, the direct vector determination unit 34, which excludes a direct vector from vectors targeted for averaging in the case where a unit region having, as a starting point thereof, a pixel location indicated by the direct vector predicted by the direct vector calculation unit 33 includes a region outside the picture, and the motion compensation predicted image generator 35, which generates a motion compensation predicted image by determining an average of pixel values of unit regions having, as a starting point thereof, pixel locations indicated by one or more direct vectors that remain without being excluded from vectors targeted for averaging by the direct vector determination unit 34, and since the image encoding device 1 is configured so as to determine a difference image between a motion compensation predicted image generated by the motion compensation predicted image generation unit 35 and an image and encode that difference image, the effect is demonstrated of being able to prevent deterioration of image quality in macro blocks along the edge of a picture without leading to a decrease in compression ratio.

In addition, since the image decoding device 2 is provided with the direct vector calculation unit 65, which predicts one or more motion vectors as direct vectors of a unit region targeted for decoding in a picture targeted for decoding, from motion vectors of decoded unit regions present in proximity to the unit region targeted for decoding, and motion vectors of unit regions at the same location as the unit region in decoded pictures positioned chronologically before and after the picture, the direct vector determination unit 66, which excludes a direct vector from vectors targeted for averaging in the case where a unit region having, as a starting point thereof, a pixel location indicated by the direct vector predicted by the direct vector calculation unit 65 includes a region outside the picture, and the motion compensation predicted image generation unit 68, which generates a motion compensation predicted image by determining an average of pixel values of unit regions having, as a starting point thereof, pixel locations indicated by one or more direct vectors that remain without being excluded from vectors targeted for averaging by the direct vector determination unit 66, and since the image decoding device 2 is configured so as to decode a prediction residual signal from compression-encoded data of an image, and add the prediction residual signal decoded value and the motion compensation predicted image generated by the motion compensation predicted image generation unit 68, the effect is demonstrated of being able restore image data of images by decoding a bit stream output from the image encoding device 1 of FIG. 2.

Furthermore, although this first embodiment indicated the example of using H.264/AVC for the video encoding method, the first embodiment can be similarly applied to other encoding methods similar to H.264/AVC (such as MPEG-2, MPEG-4 Visual or SMPTE VC-1).

### Second Embodiment

### <Configuration of Image Encoding Device 1>

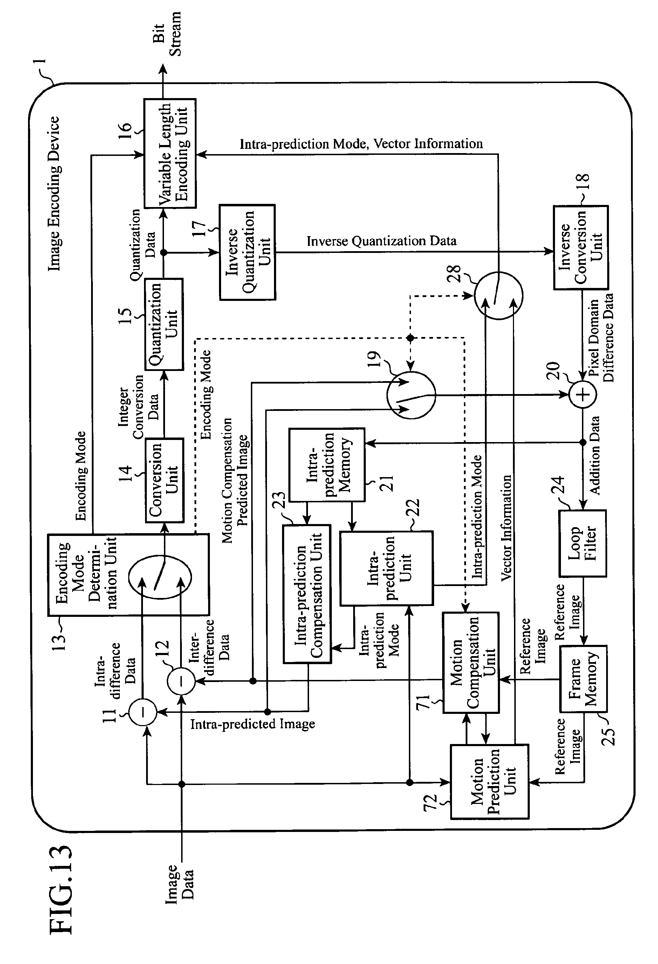

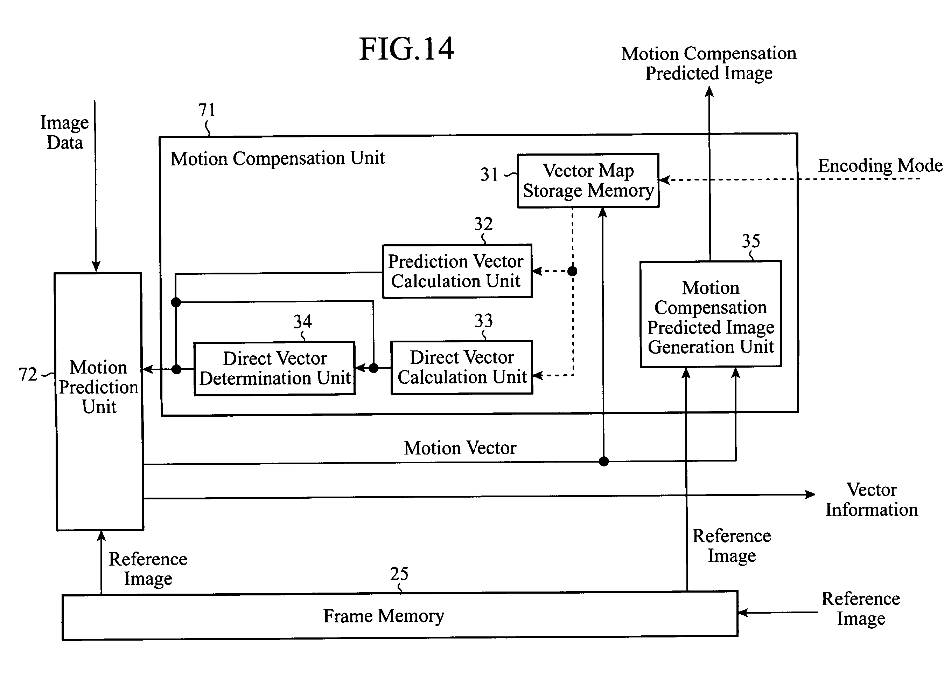

FIG. 13 is a block diagram showing the image encoding device 1 according to a second embodiment of this invention, and in this drawing, the same reference symbols are used to indicate those portions that are identical or equivalent to those of FIG. 2, and an explanation thereof is omitted.
In addition, FIG. 14 is a block diagram showing the interior of a motion compensation unit 71 in the image encoding device 1 of FIG. 13, and in this drawing as well, the same reference symbols are used to indicate those portions that are identical or equivalent to those of FIG. 3, and an explanation thereof is omitted.

In FIGS. 13 and 14, the motion compensation unit 71 carries out processing that divides a plurality of pictures that compose image data into prescribed unit regions to predict one or more prediction vectors or direct vectors of each unit region, and also generates a motion compensation predicted image from one or more optimum motion vectors determined by a motion prediction unit 72 and image data of reference images stored in the frame memory 25.
However, the motion compensation unit 71 differs from the motion compensation unit 26 of FIG. 2 in that, all direct vectors predicted by the internal direct vector calculation unit 33 are output to the motion prediction unit 72 instead of only one or more direct vectors remaining as vectors targeted for averaging without being excluded by the internal direct vector determination unit 34.

Although the motion prediction unit 72 determines an optimum motion vector by using a direct vector or motion vector in the same manner as the motion prediction unit 27 of FIG. 2, since it receives all direct vectors predicted by the direct vector calculation unit 33 from the motion compensation unit 71 instead of one or more direct vectors remaining as vectors targeted for averaging without being excluded by the direct vector determination unit 34, those direct vectors near the edges of the picture having a higher prediction efficiency are selected.
In addition, the motion prediction unit 72 outputs information indicating which direct vector has been selected to the switch 28 by including in vector information.

Next, an explanation is provided of operation.
The motion compensation unit 71 outputs one or more prediction vectors predicted by the internal prediction vector calculation unit 32 to the motion prediction unit 72, and outputs one or more direct vectors (to be referred to as "direct vector A") remaining as vectors targeted for averaging without being excluded by the internal direct vector determination unit 34 to the motion prediction unit 72.
In addition, the motion compensation unit 71 outputs all direct vectors (to be referred to as "direct vectors B") predicted by the internal direct vector calculation unit 33 to the motion prediction unit 72.

Although the motion prediction unit 72 determines an optimum motion vector in the same manner as the motion prediction unit 27 of FIG. 2 when a direct vector and prediction vector are received from the motion compensation unit 71, since the direct vectors B are also received from the motion compensation unit 71 in addition to the direct vector A, direct vector A or direct vectors B are selected after determining which of the direct vectors results in higher prediction efficiency near the edges of the picture.
Since prediction efficiency decreases in the case where a unit region having, as a starting point thereof, a pixel location indicated by a direct vector includes a region outside the picture as previously explained in the first embodiment, although the use of the direct vector A rather than the direct vectors B yields higher prediction efficiency near the edges of the picture, in the case where, for example, the area of a region outside the picture included in a unit region is extremely small, use of the direct vectors B may yield higher prediction efficiency near the edges of the picture.
Furthermore, the method for selecting a direct vector yielding the highest prediction efficiency uses the technology typically referred to as R-D optimization, and processing is carried out for determining the optimum direct vector.

When an optimum motion vector has been determined, the motion prediction unit 72 outputs vector information relating to that optimum motion vector to the switch 28.
Namely, when determining an optimum motion vector, if the optimum motion vector is determined using a prediction vector predicted by the prediction vector calculation unit 32 of the motion compensation unit 71, the motion prediction unit 72 outputs a difference vector indicating a difference between that motion vector and the prediction vector to the switch 28 as vector information.
When determining an optimum motion vector, if the optimum motion vector is determined using the direct vector A output from the direct vector determination unit 34 of the motion compensation unit 71, the motion prediction unit 72 outputs information indicating that the optimum motion vector has been determined from a direct vector, and information indicating that the direct vector A output from the direct vector determination unit 34 has been selected, to the switch 28 as vector information.
When determining an optimum motion vector, if the optimum motion vector is determined using the direct vectors B output from the direct vector calculation unit 33 of the motion compensation unit 71, the motion prediction unit 72 outputs information indicating that the optimum motion vector has been determined from a direct vector, and information indicating that the direct vectors B output from the direct vector calculation unit 33 have been selected, to the switch 28 as vector information.

### <Configuration of Image Decoding Device 2>

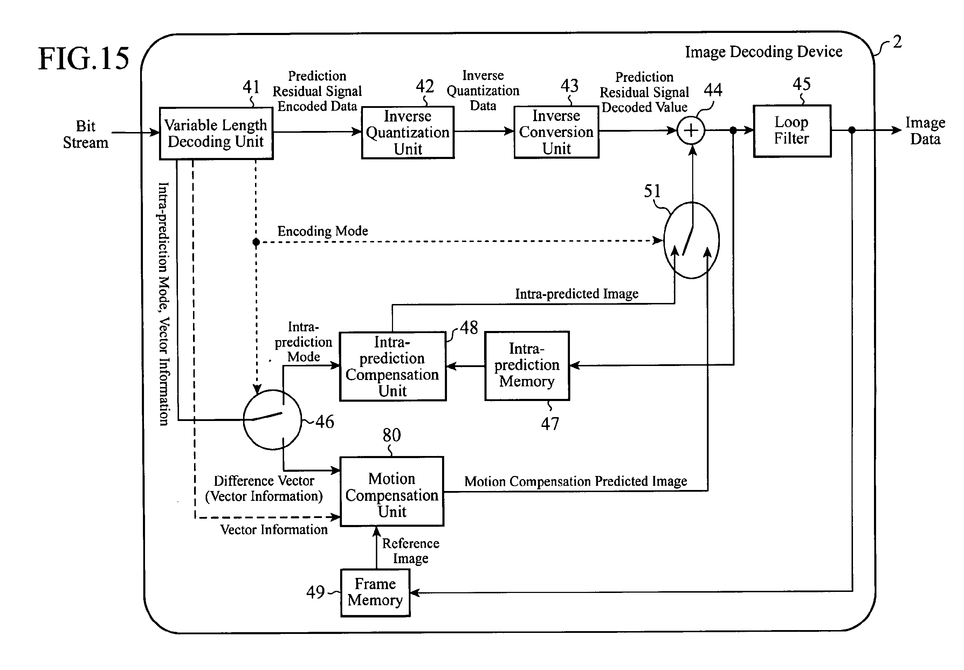

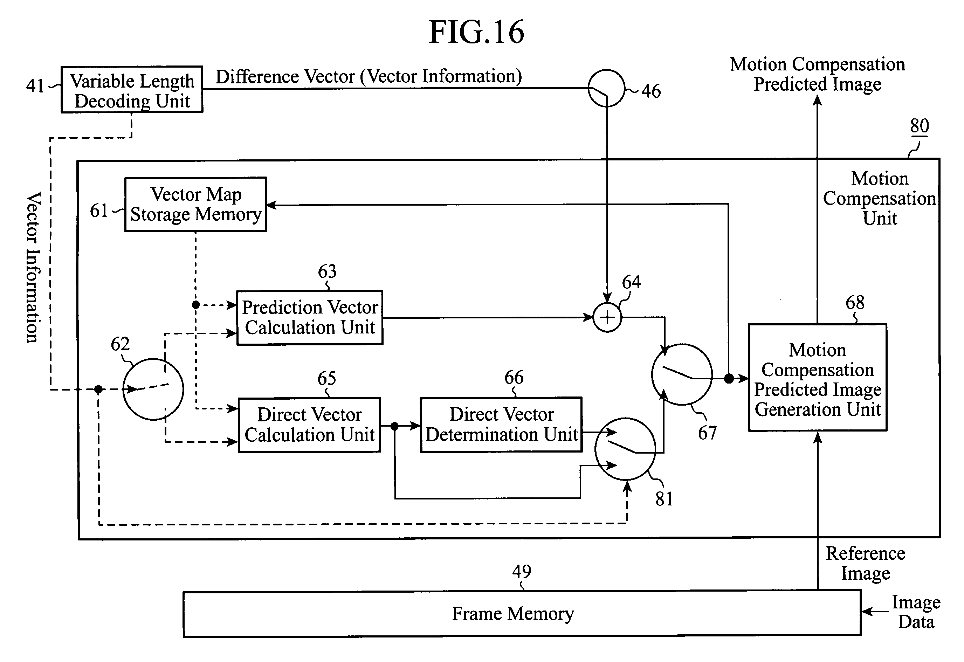

FIG. 15 is a block diagram showing the image decoding device 2 according to a second embodiment of this invention, and in this drawing, the same reference symbols are used to indicate those portions that are identical or equivalent to those of FIG. 11, and an explanation thereof is omitted.
In addition, FIG. 16 is a block diagram showing the interior of a motion compensation unit 80 in the image decoding device 2 of FIG. 15, and in this drawing as well, the same reference symbols are used to indicate those portions that are identical or equivalent to those of FIG. 12, and an explanation thereof is omitted.

In FIGS. 15 and 16, the motion compensation unit 80 carries out processing that divides a plurality of pictures that compose image data into prescribed unit regions to predict one or more prediction vectors or direct vectors of each unit region, and also generates a motion compensation predicted image from image data of reference images stored in the frame memory 49.
However, the motion compensation unit 80 differs from the motion compensation unit 50 of FIG. 11 in that, a direct vector output from the internal direct vector determination unit 66 or the direct vector calculation unit 65 is selected in accordance with selection information of the direct vector A or the direct vectors B included in vector information output from the variable length decoding unit 41.

A switch 81 of the motion compensation unit 80 selects a direct vector output from the direct vector determination unit 66 and outputs that direct vector to the switch 67 if direct vector selection information included in vector information output from the variable length decoding unit 41 indicates that the direct vector A has been selected, or selects a direct vector output from the direct vector calculation unit 65 and outputs that direct vector to the switch 67 if the direct vector selection information indicates that the direct vectors B have been selected.

The following provides an explanation of operation.
The motion compensation unit 80 divides a plurality of pictures that compose image data into prescribed unit regions to predict one or more prediction vectors or direct vectors of each unit region, and also generates a motion compensation predicted image from image data of reference images stored in the frame memory 49 in the same manner the motion compensation unit 50 of FIG. 11.
However, differing from the motion compensation unit 50 of FIG. 11, the motion compensation unit 80 selects a direct vector output from the internal direct vector determination unit 66 or the direct vector calculation unit 65 in accordance with selection information of the direct vector A or the direct vectors B included in vector information output from the variable length decoding unit 41.

Namely, when vector information is received from the variable length decoding unit 41, the switch 81 of the motion compensation unit 80 selects a direct vector output from the direct vector determination unit 66 and outputs that direct vector to the switch 67 if direct vector selection information included in that vector information indicates that the direct vector A has been selected, or selects a direct vector output from the direct vector calculation unit 65 and outputs that direct vector to the switch 67 if the direct vector selection information indicates that the direct vectors B have been selected.

As is clear from the previous explanation, according to this second embodiment, since a motion compensation predicted image is generated by selecting the direct vector A or the direct vectors B, the effect is demonstrated of enhancing the possibility of improving prediction efficiency near the edges of the picture.

Furthermore, it goes without saying that various types of encoding units (for each block targeted for encoding, slice (collections of blocks targeted for encoding) units, picture units or sequence (collection of pictures) units) can be considered for units that encode the above-mentioned vector information. As a result of encoding vector information as one parameter of each of the encoding units described above and encoding in a bit stream, direct vector selection results intended by the image encoding device 1 can be conveyed to the image decoding device 2.

### Third Embodiment

Although it was indicated in the previously described first and second embodiments that the direct vector determination unit 34 in the image encoding device 1 excludes a direct vector from vectors targeted for averaging in the case where a unit region having, as a starting point thereof, a pixel location indicated by that direct vector predicted by the direct vector calculation unit 33 includes a region outside the picture, in the case where a unit region having, as a starting point thereof, a pixel location indicated by a direct vector predicted by the direct vector calculation unit 33 includes a region outside the picture, the direct vector determination unit 34 may determine whether or not the unit region having, as a starting point thereof, a pixel location indicated by the direct vector includes a region outside a tolerance region adjacent to the picture, and if the unit region having, as a starting point thereof, a pixel location indicated by the direct vector does not include a region outside that tolerance region, the direct vector may not be excluded from vectors targeted for averaging, while if the unit region having, as a starting point thereof, a pixel location indicated by the direct vector includes a region outside that tolerance region, that direct vector may be excluded from vectors targeted for averaging.

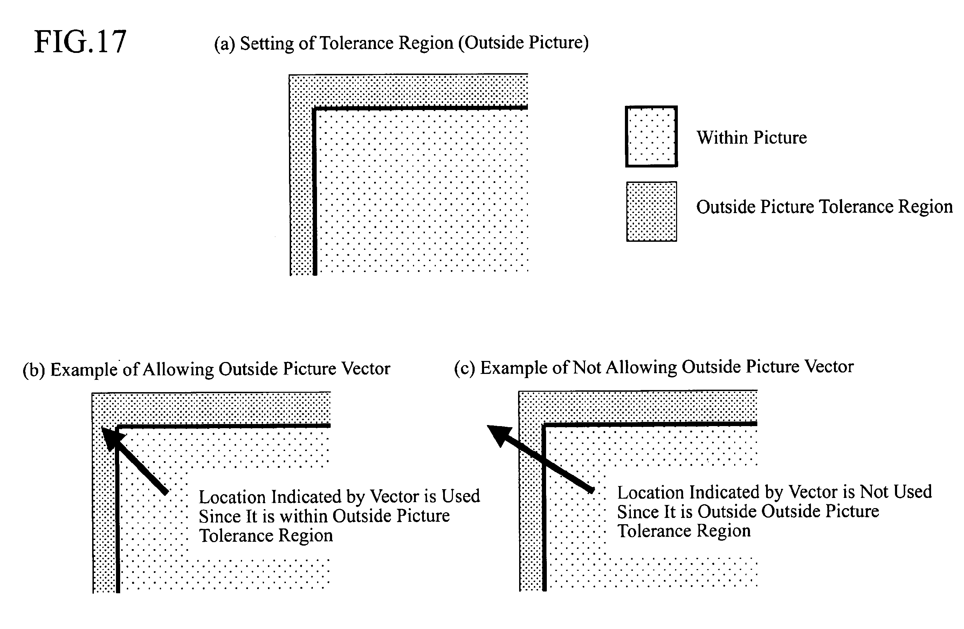

FIG. 17 is an explanatory drawing indicating the contents of processing of the direct vector determination unit 34.
The following provides a detailed explanation of the contents of processing the direct vector determination unit 34.
A tolerance region (region adjacent to picture) is preset in the direct vector determination unit 34 as shown in FIG. 17.
In the case where a unit region having, as a starting point thereof, a pixel location indicated by a direct vector predicted by the direct vector calculation unit 33 includes a region outside the picture, the direct vector determination unit 34 determines whether or not the unit region having, as a starting point thereof, a pixel location indicated by that direct vector includes a region outside the tolerance region.

If the unit region having, as a starting point thereof, a pixel location indicated by that direct vector does not include a region outside the tolerance region as shown in FIG. 17B (if the pixel location indicated by the direct vector is within the tolerance region), the direct vector determination unit 34 outputs that direct vector to the motion prediction unit 27 (or 72) without excluding the direct vector from vectors targeted for averaging.
If the unit region having, as a starting point thereof, a pixel location indicated by that direct vector includes a region outside the tolerance region as shown in FIG. 17C (if the pixel location indicated by the direct vector is outside the tolerance region), the direct vector determination unit 34 excludes that direct vector from vectors targeted for averaging.

Although it was indicated in the previously described first and second embodiments that the direct vector determination unit 66 in the image decoding device 2 excludes a direct vector from vectors targeted for averaging in the case where a unit region having, as a starting point thereof, a pixel location indicated by that direct vector predicted by the direct vector calculation unit 65 includes a region outside the picture, in the case where a unit region having, as a starting point thereof, a pixel location indicated by a direct vector predicted by the direct vector calculation unit 65 includes a region outside the picture, the direct vector determination unit 66 may determine whether or not the unit region having, as a starting point thereof, a pixel location indicated by the direct vector includes a region outside a tolerance region adjacent to the picture, and if the unit region having, as a starting point thereof, a pixel location indicated by the direct vector does not include a region outside that tolerance region, the direct vector may not be excluded from vectors targeted for averaging, while if the unit region having, as a starting point thereof, a pixel location indicated by the direct vector includes a region outside that tolerance region, that direct vector may be excluded from vectors targeted for averaging.

The following provides a detailed explanation of the contents of processing the direct vector determination unit 66.
The same tolerance region as that of the direct vector determination unit 34 of the image encoding unit 1 is preset in the direct vector determination unit 66.
In the case where a unit region having, as a starting point thereof, a pixel location indicated by a direct vector derived by the direct vector calculation unit 65 includes a region outside the picture, the direct vector determination unit 66 determines whether or not the unit region having, as a starting point thereof, a pixel location indicated by that direct vector includes a region outside the tolerance region.

If the unit region having, as a starting point thereof, a pixel location indicated by that direct vector does not include a region outside the tolerance region as shown in FIG. 17B (if the pixel location indicated by the direct vector is within the tolerance region), the direct vector determination unit 66 outputs that direct vector to the switch 67 (or 81) without excluding the direct vector from vectors targeted for averaging.
If the unit region having, as a starting point thereof, a pixel location indicated by that direct vector includes a region outside the tolerance region as shown in FIG. 17C (if the pixel location indicated by the direct vector is outside the tolerance region), the direct vector determination unit 66 excludes that direct vector from vectors targeted for averaging.

As is clear from the previous explanation, according to this third embodiment, since a configuration is employed in which a direct vector is not excluded from vectors targeted for averaging if a unit region having, as a starting point thereof, a pixel location indicated by that direct vector does not include a region outside a tolerance region, but excludes that direct vector from vectors targeted for averaging if the unit region having, as a starting point thereof, a pixel location indicated by the direct vector includes a region outside the tolerance region, the effect is demonstrated of being able to enhance the possibility of improving prediction efficiency near edges of the picture.

In this third embodiment, although the direct vector determination unit 34 of the image encoding device 1 and the direct vector determination unit 66 of the image decoding device 2 are indicated as being preset with the same tolerance region, information indicating the tolerance region set by the direct vector determination unit 34 of the image encoding device 1 may be encoded, and that encoded data may be transmitted to the image decoding device 2 by including in a bit stream.
As a result, the direct vector determination unit 66 of the image decoding device 2 is able to use the same tolerance region as the tolerance region set in the direct vector determination unit 34 of the image encoding device 1.

Furthermore, it goes without saying that various types of encoding units (for each block targeted for encoding, slice (collections of blocks targeted for encoding) units, picture units or sequence (collection of pictures) units) can be considered for units that encode information indicating a tolerance region. As a result of encoding information indicating a tolerance region as one parameter of each of the encoding units described above and encoding in a bit stream, a tolerance region intended by the image encoding device 1 can be conveyed to the image decoding device 2.

### Fourth Embodiment

Although it was indicated in the previously described first and second embodiments that the direct vector determination unit 34 in the image encoding device 1 excludes a direct vector from vectors targeted for averaging in the case where a unit region having, as a starting point thereof, a pixel location indicated by that direct vector derived by the direct vector calculation unit 33 includes a region outside the picture, the direct vector determination unit 34 may compose motion vector correction unit, and may output a direct vector to the motion prediction unit 27 (or 72) if a unit region having, as a starting point thereof, a pixel location indicated by the direct vector predicted by the direct vector calculation unit 33 does not include a region outside the picture, or may correct a unit region having, as a starting point thereof, a pixel location indicated by that direct vector to a region within the picture and output the direct vector following correction to the motion prediction unit 27 (or 72) if the unit region having, as a starting point thereof, a pixel location indicated by that direct vector includes a region outside the picture.

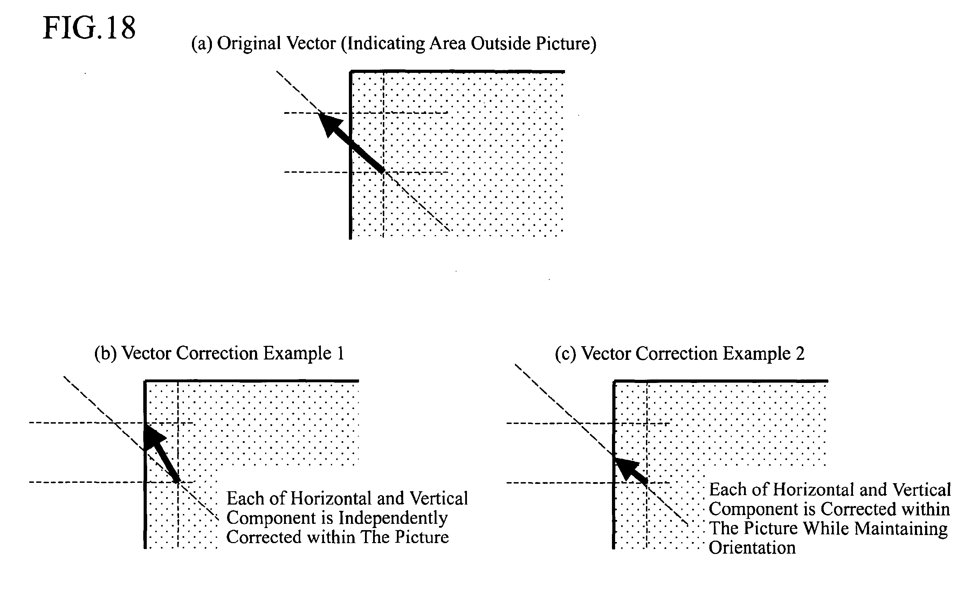

FIG. 18 is an explanatory drawing indicating the contents of processing of the direct vector determination unit 34.
The following provides a detailed explanation of the contents of processing of the direct vector determination unit 34.
The direct vector determination unit 34 determines whether or not a unit region having, as a starting point thereof, a pixel location indicated by a direct vector predicted by the direct vector calculation unit 33 includes a region outside the picture.

The direct vector determination unit 34 outputs a direct vector to the motion prediction unit 27 (or 72) if a unit region having, as a starting point thereof, a pixel location indicated by the direct vector does not include a region outside the picture in the same manner as the previously described first and second embodiments.
If a unit region having, as a starting point thereof, a pixel location indicated by a direct vector includes a region outside the picture (case of the direct vector indicating a region outside the picture) as indicated in FIG. 18A, the direct vector determination unit 34 corrects the unit region having, as a starting point thereof, a pixel location indicated by that direct vector to a region within the picture as shown in FIGS. 18B and 18C, and outputs the direct vector after correction to the motion prediction unit 27 (or 72).
Furthermore, FIG. 18B indicates an example of independently correcting each horizontal and vertical component to be within the picture, while FIG. 18C indicates an example of correcting each horizontal and vertical component to be within the picture while maintaining their orientation.

Although it is indicated in the previously described first and second embodiments that the direct vector determination unit 66 in the image decoding device 2 excludes a direct vector from vectors targeted for averaging in the case where a unit region having, as a starting point thereof, a pixel location indicated by that direct vector predicted by the direct vector calculation unit 65 includes a region outside the picture, the direct vector determination unit 66 may compose motion vector correction unit, and may output a direct vector to the switch 67 (or 81) if a unit region having, as a starting point thereof, a pixel location indicated by the direct vector predicted by the direct vector calculation unit 65 does not include a region outside the picture, or may correct a unit region having, as a starting point thereof, a pixel location indicated by that direct vector to a region within the picture and output the direct vector following correction to the switch 67 (or 81) if the unit region having, as a starting point thereof, a pixel location indicated by that direct vector includes a region outside the picture.

The following provides a detailed explanation of the contents of processing of the direct vector determination unit 66.
The direct vector determination unit 66 determines whether or not a unit region having, as a starting point thereof, a pixel location indicated by a direct vector predicted by the direct vector calculation unit 65 includes a region outside the picture.

The direct vector determination unit 66 outputs a direct vector to the switch 67 (or 81) if a unit region having, as a starting point thereof, a pixel location indicated by the direct vector does not include a region outside the picture in the same manner as the previously described first and second embodiments.
If a unit region having, as a starting point thereof, a pixel location indicated by a direct vector includes a region outside the picture (case of the direct vector indicating a region outside the picture) as indicated in FIG. 18A, the direct vector determination unit 66 corrects the unit region having, as a starting point thereof, a pixel location indicated by that direct vector to a region within the picture as shown in FIGS. 18B and 18C using the same correction method as the correction method of the direct vector determination unit 34 in the image encoding device 1, and outputs the direct vector after correction to the switch 67 (or 81).

As is clear from the previous explanation, according to this fourth embodiment, since a configuration is employed such that a unit region having, as a starting point thereof, a pixel location indicated by a direct vector is corrected to a region within the picture if the unit region having, as a starting point thereof, a pixel location indicated by that direct vector includes a region outside the picture, the effect is demonstrated of being able to enhance the possibility of improving prediction efficiency near edges of the picture.

In this fourth embodiment, although the direct vector determination unit 34 of the image encoding device 1 and the direct vector determination unit 66 of the image decoding device 2 are indicated as correcting a direct vector by using the same correction method, information indicating the correction method used by the direct vector determination unit 34 of the image encoding device 1 may be encoded, and that encoded data may be transmitted to the image decoding device 2 by including in a bit stream.
As a result, the direct vector determination unit 66 of the image decoding device 2 is able to use the same correction method as the correction method used by the direct vector determination unit 34 of the image encoding device 1.

Furthermore, it goes without saying that various types of encoding units (for each block targeted for encoding, slice (collections of blocks targeted for encoding) units, picture units or sequence (collection of pictures) units) can be considered for units that encode information indicating the vector correction method described above. As a result of encoding information indicating a vector correction method as one parameter of each of the encoding units described above and encoding in a bit stream, a vector correction method intended by the image encoding device 1 can be conveyed to the image decoding device 2.

### INDUSTRIAL APPLICABILITY

Since the image encoding device and image decoding device according to this invention are able to prevent deterioration of image quality in macro blocks along edges of a picture without leading to a decrease in compression ratio, it is suitable for use as, for example, an image encoding device that compresses and encodes digital video signals in the form of image data and outputs image compression-encoded data, or an image decoding device that decodes image compression-encoded data output from an image encoding device and restores the data to digital video signals.

## Claims

1. An image encoding device that divides a plurality of pictures composing a video signal into prescribed unit regions, determines a motion vector for each unit region, and encodes the video signal by compression by using the motion vector, comprising:
motion vector derivation unit for deriving one or more motion vectors of a unit region targeted for encoding in a picture targeted for encoding, from motion vector of neighbouring encoded unit region, and from motion vector of unit region located at a previously encoded picture;
motion vector selection unit for, in the case where a unit region having, as a starting point thereof, a pixel location indicated by a motion vector derived by the motion vector derivation unit includes a region outside a picture, excluding that motion vector from vectors targeted for averaging;
motion compensation predicted image generation unit for generating a motion compensation predicted image by obtaining pixel values of motion compensation predicted image for the unit region targeted for encoding, with one or more motion vectors determined by the motion vector selection unit; and
encoding unit for determining a difference image between the picture to be encoded and a motion compensation predicted image generated by the motion compensation predicted image generation unit and encoding the difference image.

2. An image encoding device that divides a plurality of pictures composing a video signal into prescribed unit regions, determines a motion vector for each unit region, and encodes the video signal by compression by using the motion vector, comprising:
motion vector derivation unit for deriving one or more motion vectors of a unit region targeted for encoding in a picture targeted for encoding, from motion vector of neighbouring encoded unit region, and from motion vector of unit region located at a previously encoded picture;
motion vector selection unit for, in the case where a unit region having, as a starting point thereof, a pixel location indicated by a motion vector derived by the motion vector derivation unit includes a region outside a picture, excluding that motion vector from vectors targeted for averaging;
motion compensation predicted image generation unit for generating a motion compensation predicted image by selecting one or more motion vectors remaining as vectors targeted for averaging without being excluded by the motion vector selection unit, or one or more motion vectors derived by the motion vector derivation unit, and by determining an average of pixel values of a unit region having, as a starting point thereof, a pixel location indicated by the selected one or more motion vectors; and
encoding unit for determining a difference image between the picture to be encoded and a motion compensation predicted image generated by the motion compensation predicted image generation unit, encoding the differential image and also encoding information indicating a result of motion vector selection by the motion compensation predicted image generation unit, and multiplexing encoded data of the information with encoded data of the difference image.

3. An image encoding device that divides a plurality of pictures composing a video signal of an image into prescribed unit regions, determines a motion vector for each unit region, and encodes the video signal by compression by using the motion vector, comprising:
motion vector derivation unit for deriving one or more motion vectors of a unit region targeted for encoding in a picture targeted for encoding, from motion vector of neighbouring encoded unit region, and from motion vector of unit region located at a previously encoded picture;
motion vector selection unit for, in the case where a unit region having, as a starting point thereof, a pixel location indicated by a motion vector derived by the motion vector derivation unit includes a region outside a picture, determining whether or not the unit region having, as a starting point thereof, a pixel location indicated by the motion vector includes a region outside a tolerance region adjacent to the picture, and not excluding the motion vector from vectors targeted for averaging if the unit region having, as a starting point thereof, a pixel location indicated by the motion vector does not include a region outside the tolerance region, and excluding the motion vector from vectors targeted for averaging if the unit region having, as a starting point thereof, a pixel location indicated by the motion vector includes a region outside the tolerance region;
motion compensation predicted image generation unit for generating a motion compensation predicted image by obtaining pixel values of motion compensation predicted image for the unit region targeted for encoding, with one or more motion vectors determined by the motion vector selection unit; and
encoding unit for determining a difference image between the picture to be encoded and a motion compensation predicted image generated by the motion compensation predicted image generation unit and encoding the difference image.

4. The image encoding device according to claim 3, wherein the encoding unit encodes information indicating a tolerance region used for determination by the motion vector selection unit, and multiplexes encoded data of the information with encoded data of the difference image.

5. An image encoding device that divides a plurality of pictures composing a video signal of an image into prescribed unit regions, determines a motion vector for each unit region, and encodes the video signal by compression by using the motion vector, comprising:
motion vector derivation unit for deriving one or more motion vectors of a unit region targeted for encoding in a picture targeted for encoding, from motion vector of neighbouring encoded unit region, and from motion vector of unit region located at a previously encoded picture;
motion vector correction unit for outputting a motion vector derived by the motion vector derivation unit if a unit region having, as a starting point thereof, a pixel location indicated by the motion vector does not include a region outside a picture, and correcting the unit region having, as a starting point thereof, a pixel location indicated by the motion vector to a region within the picture and outputting the motion vector after correction if the unit region having, as a starting point thereof, a pixel location indicated by the motion vector includes a region outside the picture;
motion compensation predicted image generation unit for generating a motion compensation predicted image by determining an average of pixel values of a unit region having, as a starting point thereof, a pixel location indicated by one or more motion vectors output from the motion vector correction unit; and
encoding unit for determining a difference image between the picture to be encoded and a motion compensation predicted image generated by the motion compensation predicted image generation unit and encoding the difference image.

6. The image encoding device according to claim 5, wherein the encoding unit encodes information indicating motion vector correction method used by the motion vector correction unit, and multiplexes encoded data of the information with encoded data of the difference image.

7. An image decoding device that divides a plurality of pictures composing a video signal into prescribed unit regions, and restores a compression-encoded video signal by using a motion vector of each unit region, comprising:
motion vector derivation unit for deriving one or more motion vectors of a unit region targeted for decoding in a picture targeted for decoding, from motion vector of neighbouring decoded unit region, and from motion vector of unit region located a previously decoded picture;
motion vector selection unit for, in the case where a unit region having, as a starting point thereof, a pixel location indicated by a motion vector derived by the motion vector derivation unit includes a region outside a picture, excluding that motion vector from vectors targeted for averaging;
motion compensation predicted image generation unit for generating a motion compensation predicted image by obtaining pixel values of motion compensation predicted image for the unit region targeted for decoding, with one or more motion vectors determined by the motion vector selection unit; and
decoding unit for decoding a prediction residual signal from compression-encoded data of the video signal, and adding the prediction residual signal to the motion compensation predicted image generated by the motion compensation predicted image generation unit.

8. An image decoding device that divides a plurality of pictures composing a video signal of an image into prescribed unit regions, and restores a compression-encoded video signal by using a motion vector of each unit region, comprising:
motion vector derivation unit for derived one or more motion vectors of a unit region targeted for decoding in a picture targeted for decoding, from motion vector of neighbouring decoded unit region, and from motion vector of unit region located at a previously decoded picture;
motion vector selection unit for, in the case where a unit region having, as a starting point thereof, a pixel location indicated by a motion vector derived by the motion vector derivation unit includes a region outside a picture, excluding that motion vector from vectors targeted for averaging;
motion compensation predicted image generation unit for generating a motion compensation predicted image by recognizing a result of motion vector selection from encoded data of information indicating a result of motion vector selection multiplexed with the compression-encoded data of the video signal, by selecting one or more motion vectors remaining as vectors targeted for averaging without being excluded by the motion vector selection unit or one or more motion vectors derived by the motion vector derivation unit in accordance with that result of selection, and by determining an average of pixel values of a unit region having, as a starting point thereof, a pixel location indicated by the selected one or more motion vectors; and
decoding unit for decoding a prediction residual signal from compression-encoded data of the video signal, and adding the prediction residual signal to the motion compensation predicted image generated by the motion compensation predicted image generation unit.

9. An image decoding device that divides a plurality of pictures composing a video signal of an image into prescribed unit regions, and restores a compression-encoded video signal by using a motion vector of each unit region, comprising:
motion vector derivation unit for deriving one or more motion vectors of a unit region targeted for decoding in a picture targeted for decoding, from motion vector of neighbouring decoded unit region, and from motion vector of unit region at a previously decoded picture;
motion vector selection unit for, in the case where a unit region having, as a starting point thereof, a pixel location indicated by a motion vector derived by the motion vector derivation unit includes a region outside a picture, determining whether or not the unit region having, as a starting point thereof, a pixel location indicated by the motion vector includes a region outside a tolerance region adjacent to the picture, and not excluding the motion vector from vectors targeted for averaging if the unit region having, as a starting point thereof, a pixel location indicated by the motion vector does not include a region outside the tolerance region, and excluding the motion vector from vectors targeted for averaging if the unit region having, as a starting point thereof, a pixel location indicated by the motion vector includes a region outside the tolerance region;
motion compensation predicted image generation unit for generating a motion compensation predicted image by determining an average of pixel values of a unit region having, as a starting point thereof, a pixel location indicated by one or more motion vectors remaining as vectors targeted for averaging without being excluded by the motion vector selection unit; and
decoding unit for decoding a prediction residual signal from compression-encoded data of the video signal, and adding the prediction residual signal to the motion compensation predicted image output by the motion compensation predicted image generation unit.

10. The image decoding device according to claim 9, wherein the motion vector selection unit recognizes a tolerance region from encoded data of information indicating the tolerance region multiplexed with the compression-encoded data of the video signal, and uses the tolerance region for the determination.

11. An image decoding device that divides a plurality of pictures composing a video signal of an image into prescribed unit regions, and restores a compression-encoded video signal by using a motion vector of each unit region, comprising:
motion vector derivation unit for deriving one or more motion vectors of a unit region targeted for decoding in a picture targeted for decoding, from motion vector of neighbouring decoded unit region, and from motion vector of unit region at a previously decoded picture;
motion vector correction unit for outputting a motion vector derived by the motion vector derivation unit if a unit region having, as a starting point thereof, a pixel location indicated by the motion vector does not include a region outside a picture, and correcting the unit region having, as a starting point thereof, a pixel location indicated by the motion vector to a region within the picture and outputting the motion vector after correction if the unit region having, as a starting point thereof, a pixel location indicated by the motion vector includes a region outside the picture;
motion compensation predicted image generation unit for generating a motion compensation predicted image by determining an average of pixel values of a unit region having, as a starting point thereof, a pixel location indicated by one or more motion vectors output from the motion vector correction unit; and
decoding unit for decoding a prediction residual signal from compression-encoded data of the video signal, and adding the prediction residual signal to the motion compensation predicted image output by the motion compensation predicted image generation unit.

12. The image decoding device according to claim 11, wherein the motion vector correction unit recognizes a motion vector correction method from encoded data of information indicating the correction method multiplexed with compression-encoded data of the video signal, and corrects a unit region having, as a starting point thereof, a pixel location indicated by the motion vector to a region within the picture in accordance with the correction method.
